# EUROPÄISCHE PATENTSCHRIFT

(11) **EP 3 266 944 B1**
(45) Veröffentlichungstag und Bekanntmachung des Hinweises auf die Patenterteilung: **15.01.2020**
(21) Anmeldenummer: 17179527.1
(22) Anmeldetag: 16.08.2013
(51) Int. Cl.: E03B 7/07, G05D 7/00, G08B 21/00, G07C 11/00, F17D 1/00, F16K 31/00, G01M 3/00, F16K 31/04, F16K 27/06, F16K 37/00

(54) **LECKAGESCHUTZ-ANORDNUNG**
LEAKAGE PROTECTION ARRANGEMENT
SYSTÈME DE PROTECTION CONTRE LES FUITES

(30) Priorität: 20.08.2012 DE 102012107594; 12.03.2013 WO PCT/EP2013/054955; 28.06.2013 DE 102013010779
(43) Veröffentlichungstag der Anmeldung: 10.01.2018
(62) Teilanmeldung aus: 13752886.5
(73) Patentinhaber: Hans Sasserath GmbH & Co. KG., 41352 Korschenbroich (DE)
(72) Erfinder: Hecking, Willi, 41372 Niederkrüchten-Elmpt (DE)
(74) Vertreter: Weisse, Renate

(56) Entgegenhaltungen:
- WO-A1-2010/039045
- US-A1- 2012 026 004

## Beschreibung

### Technisches Gebiet

Die Erfindung betrifft eine Leckageschutzanordnung nach dem Oberbegriff des Anspruchs 1.

Eine solche Anordnung wird besonders in Hauswasserinstallationen verwendet. Das von einer Versorgungsleitung für ein Gebäude zur Verfügung gestellte Trinkwasser wird gefiltert und auf einen gleichmäßigen Druck geregelt. Wenn Wasser an einer Zapfstelle entnommen wird, ändert sich der Strömungszustand. Für eine kurze Zeit fließt Wasser durch die Anordnung. Unter untypischen Strömungszuständen werden solche Zustände verstanden, die bei normalem Betrieb nicht auftreten. Ein Beispiel für solche Strömungszustände ist ein kleines Leck. Ein solches kleines Leck tritt beispielsweise durch Lochfraß auf. Bei Auftreten eines Lecks fließt ständig eine geringe Wassermenge. Ein anderes Beispiel für solche untypischen Strömungszustände ist ein Wasserrohrbruch. Dann fließen in sehr kurzer Zeit sehr große Wassermengen. Als Leckageschutz wird das Erfassen solcher untypischen Strömungszustände verstanden und das Ergreifen geeigneter Maßnahmen. Insbesondere wird die Absperrung bei Leckage geschlossen.

Es gibt auch unerwünschte Strömungszustände. Diese liegen insbesondere bei Stagnation vor. Wenn über einen längeren Zeitraum kein Wasser gezapft wird, stagniert das Wasser. Dann können sich Keime bilden. Das ist unerwünscht.

Bei Leckageschutzanordnungen geht es nicht um die Überwachung des Wasserverbrauchs, sondern um das Erfassen der Strömungszustände ohne in nennenswertem Maß in die Hydraulik einzugreifen. Mit anderen Worten: Der Verbraucher darf soviel Wasser verbrauchen, wie er mag. Nur, wenn ein untypischer oder unerwünschter Strömungszustand vorliegt, wird in die Hydraulik eingegriffen und die Absperrung betätigt.

### Stand der Technik

DE 10 2009 045 150 B3 offenbart eine Wasserversorgungsvorrichtung, bei welcher eine zentrale Absperrung vorgesehen ist, die öffnet, wenn ein Sensor die Anwesenheit einer Person anzeigt. Bei dieser Vorrichtung ist die Wasserzufuhr dauerhaft geschlossen. Derartige Anordnungen sind besonders anfällig und arbeiten nur, wenn keine Wasserverbraucher, wie etwa eine Heizungsanlage, angeschlossen sind, die automatisch Wasser nachfüllen.

US 2012/0026004 A1 offenbart eine Anordnung zur Überwachung des Wasserverbrauchs in einem Haushalt. Die Anordnung umfasst einen Strömungsmesser, dessen Signale an ein hausinternes Steuergerät übertragen werden. Für den Fall, dass der Wasserverbrauch eines angeschlossenen Gerätes den mittleren Wasserverbrauch übersteigt, wird eine Nachricht an den Hauseigentümer übertragen. Dieser kann auf die Nachricht antworten, dass eine Absperrung betätigt wird, so dass kein weiteres Wasser verbraucht wird. Mit der Anordnung lässt sich der Schaden bei einem Rohrbruch nicht sinnvoll begrenzen, weil die Absperrung von Hand ausgelöst werden muss.

WO2010/039045A1 offenbart eine Wasser-Management-System mit einem Ventil und einem Strömungsmesser in der Wasserleitung, welches die schrittweise Wasserzufuhr drosselt, wenn der Wasserverbrauch einen Grenzwert übersteigt. Bei Leckage wird das Ventil geschlossen. Bei Drosselung des Wasserzuflusses wird die Hydraulik geändert. Es besteht die Gefahr der unerwünschten Geräuschentwicklung. Das Wasser-Management System ist nur für jeweils ein Gebäude vorgesehen.

GB 2 360 365 A offenbart eine Leckageschutzanordnung mit einem automatisch aktivierbaren Absperrventil. Die Anordnung umfasst ein Absperrventil mit einem Strömungsmesser an der Hauptleitung. Im Leckagefall wird die gesamte Hauptleitung abgesperrt. Das funktioniert in kleineren Einfamiliengebäuden gut, ist aber für Mehrfamilienhäuser praktisch ungeeignet, weil zu hohe Schwellwerte eingestellt werden müssen, um den gleichzeitigen Wasserverbrauch an verschiedenen Zapfstellen zu ermöglichen, ohne dass gleich der Leckagefall angenommen wird.

DE 10 2005 00 009 A1 offenbart eine Filteranordnung, welche einen integrierten Leckageschutz aufweist. Die Anordnung verwendet einen Rückspülfilter und eine unmittelbar vor dem Rückspülfilter angeordnete Turbine. Jede Wasserströmung durch den Filter wird mit der Turbine erfasst und ausgewertet. Die hydraulischen Verhältnisse an der Zapfstelle bleiben zu jedem Zeitpunkt unverändert. DE 10 2007 026 162 A1 offenbart einen Druckminderer mit strömungsmessenden Mitteln. Wenn Leckage detektiert wird, wird der Druckminderer geschlossen. DE 20 2008 003 055 U1 offenbart einen Druckminderer-Filter-Modulbausatz, in den strömungsmessende Mittel für Leckageschutz einsetzbar sind.

Die bekannten Leckageschutzanordnungen werden allein oder in Kombination mit Druckminderern und/oder Filtern am Hauswassereingang für die Trinkwasserversorgung installiert. Je nach Verbrauchsgewohnheiten an den Zapfstellen werden maximale Durchflussraten eingestellt. Das funktioniert für kleinere Gebäude, etwa Einfamilienhäuser gut.

Bei größeren Gebäuden, wie Mehrfamilienhäusern oder öffentlichen Gebäuden, mit sehr vielen Zapfstellen, wird häufig an mehreren Zapfstellen gleichzeitig Wasser entnommen. Durchflussraten von 80 l/min oder mehr sind dabei möglich. Entsprechend muss die maximale Durchflussrate hoch eingestellt werden. Wenn ein Wasserschaden durch Rohrbruch auftritt, wird dies nur spät entdeckt und der entstehende Schaden ist hoch. Minileckagen sind besonders in großen Gebäuden schwer zu lokalisieren.

Bei der sogenannten Urlaubsschaltung kann die Toleranz eines Gerätes auf einen geringeren Wert eingestellt werden. Die Bewohner des Gebäudes sind abwesend und das Gerät wird so eingestellt, dass jede Strömung oberhalb eines geringen Wertes als Leckage interpretiert wird. Dann wird Leckage besonders früh entdeckt. Eine Urlaubsschaltung ist in einem Mehrfamilienhaus praktisch nicht möglich, weil fast immer jemand in dem Gebäude anwesend ist und Wasser zapfen kann.

Die Einstellung der Werte, beispielsweise maximale Durchflussraten, Urlaubsschaltung und dergleichen erfolgt durch den Installateur am Ort des Leckagegerätes am Hauswassereingang, der sich üblicherweise im Keller befindet.

### Offenbarung der Erfindung

Es ist Aufgabe der Erfindung, den Leckageschutz in Gebäuden zu verbessern und zu vereinfachen ohne die hydraulischen Verhältnisse an der Zapfstelle zu verändern. Erfindungsgemäß wird die Aufgabe durch eine Leckageschutzanordnung mit den Merkmalen des Anspruchs 1 gelöst. Dabei kann ein zentraler Netzwerk-Server mit einem Computerprogramm vorgesehen sein, über welchen die Kommunikationseinheiten des Benutzer-Endgeräts und die Kommunikationseinheiten der Steuergeräte kommunizieren.

Mit einer solchen Anordnung ist das Benutzer-Endgerät räumlich von der Leckageschutzanordnung getrennt. Das Benutzer-Endgerät kann mit einer benutzerfreundlichen und/oder aufwändigeren Oberfläche gestaltet werden. Dabei können Mittel zum Anzeigen und Einstellen von Parametern und/oder Erzeugen von Steuerbefehlen an dem Benutzer-Endgerät vorgesehen sein. Insbesondere können Geräte verwendet werden, deren Handhabung auch dem Laien vertraut ist.

Bei der Erfindung ist vorgesehen, dass zumindest ein weiteres Armaturenteil mit einem Steuergerät und einem Strömungsmesser und einer Absperrung in der Wasserinstallation vor einer oder mehreren Zapfstellen vorgesehen ist; und mit der Kommunikationseinheit zusätzlich eine Kommunikation der Steuergeräte untereinander und/oder mit dem zentralen Server herstellbar ist.

Auf diese Weise kann jede Zapfstelle oder jede Gruppe von Zapfstellen, etwa in einer Wohneinheit, eine eigene Leckageschutzarmatur mit eigenem Steuergerät erhalten, die individuell angesteuert werden kann. Die Wohungsbewohner sind gewöhnlich nicht mit Wasserinstallationen vertraut. Jede Leckageschutzarmatur weist daher eine Kommunikationseinheit auf, welche eine Steuerung von außerhalb ermöglicht. Beispielsweise kann der zentrale Server für den Wohnungsbewohner oder dessen Installateur zugänglich sein. An dem Server können, z.B. über eine Anwendung auf einem mit dem Server über das Internet oder Mobilfunknetz verbundenen mobilen Endgerät (App), die für diese Wohnung sinnvollen Leckageschutzparameter individuell eingestellt werden. Zusätzlich können Einstellungen auch direkt am Steuergerät über eine Fernbedienung, eine Tastatur, ein Touchscreen oder einen Bedienknopf vorgenommen werden. Dies ist besonders bei der Neuinstallation oder Wartung sinnvoll, wenn der Installateur sich in unmittelbarer Nähe des Gerätes befindet.

Vorzugsweise kommunizieren die Kommunikationseinheiten, die Benutzer-Endgeräte und der zentrale Server über das Internet oder ein anderes geeignetes Netzwerk miteinander. Der Wohnungsinhaber oder sein Installateur kann beispielsweise über das Internet ein Portal aufrufen, über welches die Parameter eingestellt werden können. Die Einstellungen können insbesondere auf dem Server gespeichert werden. Bei einem Ausfall der Leckageanordnung oder eines der Steuergeräte bleiben die Daten erhalten. Vorteilhafterweise werden die Signale ohne weitere Verarbeitung direkt an den Server gesendet. Dann kann das Steuergerät besonders kostengünstig ausgeführt werden und braucht keine eigene Logik oder aufwändige Software. Die gesamte oder zumindest der überwiegende Teil der Datenverarbeitung erfolgt auf dem Server. Da der Server die Daten einer Vielzahl von Leckageschutzanordnungen erhält, können diese Daten ggf. mit Zustimmung des Bewohners und/oder in anonymisierter Form auch in ihrer Gesamtheit ausgewertet und Statistiken erstellt werden. Dadurch erschließen sich dem Hersteller oder Dienstleister neue Möglichkeiten der Qualitätskontrolle für seine Geräte.

Der zentrale Server kann insbesondere vom Hersteller oder einem Verwalter eingerichtet und verwaltet werden. Er kommuniziert nicht nur mit den Steuergeräten eines einzigen Gebäudes, sondern für alle Gebäude mit geeigneten Leckageschutzanordnungen. Das hat den Vorteil, dass die Steuergeräte vor Ort vergleichsweise einfach ausgestattet sein dürfen. Die Daten und die Software auf dem zentralen Server können regelmäßig mit geringem Aufwand vom Hersteller gepflegt werden. Ein Update vor Ort durch den Benutzer oder dessen Installateur ist nicht erforderlich. Die Kommunikation über und mit dem Server ist insbesondere in einer Weise ausgestaltet, dass dort Paramter eingestellt werden und Auswertungen erfolgen. Die Steuergeräte arbeiten jedoch auch dann, wenn das Internet ausfällt. Dann können die Parameter auch von Hand am Gerät eingestellt werden.

Wird eine Leckage festgestellt, schließt die Absperrung automatisch. Zusätzlich kann eine Mitteilung vom Server direkt an eine Kommunikationseinrichtung des Wohnungsinhabers oder seines Installateurs gesendet werden. Beispielsweise kann eine automatische Email generiert und versandt oder eine Kurznachricht (SMS) an ein Telefon oder Smartphone gesendet werden.

Bei einer besonders bevorzugten Ausgestaltung der Erfindung ist vorgesehen, dass die Kommunikationseinheiten und Benutzer-Endgeräte einen Sender-Empfänger für die drahtlose Kommunikation über ein LAN, WLAN, Mobilfunknetz oder ein anderes drahtloses Netzwerk aufweisen. Dadurch wird eine Verkabelung vermieden und die Installation kann in gewohnter Weise allein durch den mit Installationen im Trinkwasserbereich befassten Installateur erfolgen.

Bei eine besonders kostengünstigen Ausgestaltung des Steuergerätes ist vorgesehen, dass der Sender-Empfänger des Steuergerätes für die Kommunikation mittels WLAN, Mobilfunknetz oder eine andere drahtloses Kommunikationsnetz in einem gesonderten Gerät angeordnet ist, der lösbar an der Kommunikationseinheit anschließbar ist. Das Steuergerät selber ist dann vergleichsweise einfach aufgebaut, braucht keine vollständige Tastatur und kann kostengünstig hergestellt werden. Nur, wenn keine geeignete Anschlussdose für eine Kabelverbindung zur Verfügung gestellt werden kann, wird das gesonderte Gerät, beispielsweise ein Sender-Empfänger für ein WLAN-Netz an das Steuergerät angeschlossen. Das gesonderte Gerät kann eine vollständige Tastatur oder ein Touchscreen zur Eingabe von Identifikationscodes oder dergleichen aufweisen, die für das Steuergerät in der Regel nicht erforderlich sind.

Alternativ kann die Kommunikation zumindest teilweise über ein Stromnetz erfolgen. Hierzu kann ein Konverter verwendet werden, wie er beispielsweise von der Devolo AG auf der Webseite www.devolo.de angeboten wird. Der Konverter wird mit einem Kabel mit dem Steuergerät verbunden und in eine Steckdose gesteckt. Die Signalübertragung erfolgt dann auf bekannte Weise über das Stromnetz bis zum Internetanschluss, der die Verbindung mit dem Internet herstellt. Insbesondere bei Gebäuden, die in dem Bereich, z.B. dem Keller, wo das Armaturenteil mit dem Steuergerät angeschlossen werden sollen, über kein WLAN und keinen Internetanschluss verfügen, ist dies eine sinnvolle, auch für den Installateur leicht einsetzbare Möglichkeit. Ein Stromanschluss ist üblicherweise auch in Technik- und Versorgungsräumen und Kellern vorhanden.

Bei einer besonders kostengünstigen Ausgestaltung der Erfindung ist vorgesehen, dass die Steuergeräte baugleich sind und über das Internet oder ein anderes geeignetes Netzwerk drahtlos mit einem gemeinsamen, zentralen Server verbunden sind, auf welchem die für die Auswertung der von dem Armaturenteil erhaltenen Signale und die Steuerung des Armaturenteils erforderliche Software vorgesehen ist. Unterschiedliche Anwendungen erfordern unterschiedliche Armaturen. Das Steuergerät kann jedoch in jedem Fall für alle Armaturenteile baugleich sein. Dadurch wird es ermöglicht, dass alle Komponenten Teil eines modularen Bausatzes sind, welcher umfasst:
(a) Steuergeräte;
(b) Armaturenteile mit Druckminderer oder Druckminderer-Filterkombination;
(c) Armaturenteile ohne Druckminderer und ohne Druckminderer-Filterkombination;
(d) Armaturenteile mit Anschluss an einen Abfluss
(e) Feuchtigkeitssensoren.

Die Benutzer-Endgeräte können von handelsüblichen Mobilfunk-Endgeräten mit Internetanschluss und einer geeigneten Application Software gebildet sein. Die Benutzer sind mit einem solchen Gerät vertraut und können das Gerät und die Software ohne zusätzliche Schulung bedienen.

Üblicherweise sind die Strömungsmesser von einer Turbine gebildet, aus deren Drehgeschwindigkeit und Anzahl der Umdrehungen die Durchflussrate und das erfolgte Strömungsvolumen berechenbar sind. Es sind aber auch andere Strömungsmesser, beispielsweise Ultraschall-Messer zur Ermittlung einer Durchflussrate denkbar. Nicht geeignet ist die alleinige Verwendung eines Drucksensors, da dieser lediglich den Druck, nicht aber die Durchflussrate misst und eine Absperrung während der Messung erforderlich machen.

Vorzugsweise weist zusätzlich zumindest eines der Armaturenteile einen zusätzlichen Drucksensor und/oder Temperatursensor auf. Mit dem Drucksensor kann der Druckabfall hinter dem Armaturenteil gemessen werden. Hierzu wird in einem Zeitraum, zu dem eine Wasserentnahme an einer Zapfstelle unwahrscheinlich ist, etwa spät in der Nacht, die Wasserzufuhr mit der Absperrung abgesperrt. Vor und nach dem Absperrzeitraum wird der Druck mit dem Drucksensor ermittelt. Bei einem Druckabfall ist von Leckage auszugehen. Die Verwendung eines Drucksensors ermöglicht auch die Detektion von sehr kleinen Lecks, die aufgrund des Anlaufwiderstands einer Turbine nicht ohne weiteres zu erfassen sind. Mit einem Temperatursensor kann das Auftreten unerwünschter Temperaturen, etwa Temperaturen, bei denen sich Keime, beispielsweise Legionellen, bilden können, überwacht und vermieden werden.

Bei einer weiteren, vorteilhaften Ausgestaltung der Erfindung ist zusätzlich ein Steuergerät vorgesehen, welches mit Signalen eines Sensors beaufschlagt ist, mit dem Regenwasser oder Wasser aus anderen Quellen als der überwachten Wasserinstallation, z.B. einem Schwimmbad, detektierbar ist. Der Sensor kann am Boden der überwachten Räume und in anderen kritischen Bereichen angeordnet werden. Wird das Auftreten von Wasser detektiert, kann dies genau wie jede andere Leckage über das Steuergerät weitergegeben werden. Zwar kann dann keine Leitung abgesperrt werden, aber die zuständigen Personen können unverzüglich, z.B. per Email oder SMS, über das Auftreten von Wasser informiert werden und ggf. geeignete Maßnahmen ergreifen.

Bei einer besonders vorteilhaften Ausgestaltung der Erfindung ist eines der Armaturenteile mit Steuergerät zentral im Bereich der Wasserversorgung der Wasserinstallation angeordnet und alle übrigen Armaturenteile mit Steuergerät sind hydraulisch dahinter installiert. Jeder Wasserdurchfluss wird also einmal an dem zentralen Steuergerät (Master) und an dem lokalen Steuergerät (Slave) registriert und ausgewertet. Durch die Kommunikation der Geräte untereinander kann das zentrale Steuergerät feststellen, ob eine sehr große Durchflussmenge auf die gleichzeitige Wasserentnahme an mehreren Zapfstellen oder auf einen Wasserverlust an nur einer Stelle zurückzuführen ist. Zudem besteht die Möglichkeit, die zentrale Leckageschutzarmatur mit einem Druckminderer oder einer Druckminderer-Filter-Kombination zu versehen, die an den individuellen Wohnungsanschlüssen nicht erforderlich sind.

Die Verwendung einer Vielzahl von lokalen Leckageschutzarmaturen vermeidet in den meisten Fällen auch, dass die Wasserzufuhr für alle Zapfstellen oder Gruppen von Zapfstellen unterbrochen werden muss, wenn Leckage auftritt. Die bei Leckage erforderliche Absperrung kann lokal begrenzt werden.

Weiterhin kann es vorteilhaft sein, wenn mehrere Armaturenteile mit Steuergerät hydraulisch in Reihe geschaltet sind, und für jedes Armaturenteil eine maximale Durchflussrate eingestellt ist, bei dem eine Absperrung erfolgt, wobei der eingestellte Wert für die maximale Durchflussrate für das von der Wasserversorgung am weitesten entfernte Armaturenteil auf den geringsten Wert der Reihe eingestellt ist und bei den hydraulisch davor installierten Armaturenteilen entsprechend der Position in der Reihe und den zulässigen Durchflussmengen an den dazwischenliegenden Zapfstellen auf einen größeren Wert eingestellt ist.

Wenn in einer Einheit besonders viele Zapfstellen vorliegen, muss eine vergleichsweise hohe maximale Durchflussrate eingestellt werden. Der entstehende Schaden wird dann schlecht begrenzt. Die Verwendung mehrerer Armaturenteile ermöglicht es zum einen, die maximalen Durchflussraten zum Ende hin auf kleinere Werte einzustellen, weil diese den Durchfluss weniger Armaturenteile überwachen. Das vordere Armaturenteil wird zwar auf einen größeren maximalen Durchfluss eingestellt, kann aber über das Steuergerät derart gesteuert werden, dass es zunächst prüft oder am zentralen Server prüfen lässt, ob sich der Durchfluss auf die dahinterliegenden Armaturenteile verteilt oder ob dieser ausschließlich aus dem von diesem Armaturenteil überwachten Bereich kommt. Nur im letzteren Fall ist eine Absperrung erforderlich. Wie bei der Verwendung einer verzweigten Anordnung ist es auch hier leichter möglich die Ursache für die Leckage zu lokalisieren. Zudem kann die Absperrung gezielter erfolgen. Bei dieser Reihenschaltung arbeitet ein Steuergerät sowohl als Master als auch als Slave. Das Steuergerät gehört gewöhnlich zu der Armatur, die der Wasserversorgung am nächsten ist.

Die Daten mit den Durchflussraten an jedem Steuergerät können auch in einer dynamischen Datenbank im zentralen Server gespeichert werden. Dann kann ermittelt werden, ob eine hohe Gesamtdurchflussrate am Wassereingang auf herkömmliche Wasserentnahme an mehreren Zapfstellen oder auf einen Rohrbruch zurückzuführen ist. Entsprechend kann die Toleranz des Armaturenteils am Wassereingang auf einen niedrigen Wert eingestellt werden. Bei höheren Werten wird zunächst geprüft, woher diese kommen, bevor die Absperrung für das gesamte Gebäude erfolgt. Nur, wenn keine entsprechend hohe Gesamt-Entnahme an den Slaves registriert wird, wird abgesperrt.

Bei besonders großen Rohrleitungen mit hohem Volumenstrom kann ein Armaturenteil vorgesehen ist, bei dem die Strömung in mehrere, parallele Teilströme aufgeteilt wird, welche separat mit eigenen Strömungsmessern erfasst und ausgewertet und anschließend wieder zusammengeführt werden. Dadurch wird der Strömungswiderstand und der Druckverlust reduziert. Je nach Anwendungsfall können zwei, drei oder sogar noch mehr Teilströme vorgesehen sein. Das Armaturenteil ist derart aufgebaut, dass die Strömung von einem gemeinsamen Einlass in parallelen Teilströmen durch verschiedene Strömungsmesser zu einem gemeinsamen Auslass fließt. Das Steuergerät ist derart ausgebildet, dass die Signale der erfassten Strömungen als zu einem Gerät gehörig gekennzeichnet werden. Dann können die Strömungen über einen geeigneten Algorithmus addiert werden.

Besonders große Wasserinstallationen mit dicken Rohrleitungen erfordern vergleichsweise träge Turbinen zur Strömungsmessung. Diese Turbinen haben einen hohen Anlaufwiderstand. Volumenströme, die durch Mikroleckage verursacht werden, können durch die Turbine hindurch fließen ohne eine Drehung auszulösen. Sie werden entsprechend überhaupt nicht detektiert. Zur Lösung dieses Problems ist ein Armaturenteil vorgesehen, bei dem ein Rückflussverhinderer, eine Klappe oder ein anderer bei großen Durchflussmengen vernachlässigbarer dynamischer Widerstand in der Strömung vorgesehen ist und die Strömung stromaufwärts zu dem Widerstand durch einen Bypass geleitet wird, in dem zusätzlich zu dem ersten Strömungsmesser in der Hauptleitung ein zweiter Strömungsmesser vorgesehen ist, der wesentlich empfindlicher ist als der erste Strömungsmesser und Strömungen erfassen kann, welche zu klein sind um den Widerstand zu überwinden.

Bei großen Durchflussraten wird der Widerstand problemlos überwunden. Der Rückflussverhinderer öffnet und die Strömung wird mit dem ersten Strömungsmesser in der Hauptleitung auf herkömmliche Weise detektiert. Bei kleinen Durchflussraten, wie sie etwa durch eine Mikroleckage verursacht wird, wird der Widerstand nicht überwunden. Der Rückflussverhinderer zum Beispiel bleibt geschlossen. Dann wird die Strömung durch den Bypass geleitet. In dem Bypass sitzt ein zweiter Strömungsmesser. Der zweite Strömungsmesser hat einen geringeren Anlaufwiderstand und ist wesentlich empfindlicher als der erste Strömungsmesser. Mit dem zweiten Strömungsmesser werden Durchflussraten berücksichtigt, die mit dem ersten Strömungsmesser nicht zu detektieren sind.

Durch Erfassung der Strömungszustände in den an die dicke Rohrleitung angeschlossenen Installationen kann ermittelt werden, ob eine eventuell vorliegende Leckage durch die dicke Rohrleitung verursacht wird oder in einer der dahinter liegenden Installationen.

In der Praxis ist es möglichst zu vermeiden die Hauptzuleitung einer größeren Wasserinstallation abzusperren. Durch eine solche Absperrung sind besonders viele Verbraucher betroffen. Auch wenn keinerlei Wasser gezapft wird unterliegen die Durchflussraten gewissen Schwankungen. Da es sich bei den Mikroleckagen um Zustände handelt, die im Schwankungsbereich liegen, ist es daher sinnvoll, die Detektion einer Mikroleckage zunächst zu speichern. Erst wenn mehrere Vorfälle nacheinander auftreten, wird eine Benachrichtigung generiert. Die Mindestanzahl der Vorfälle, die für eine Benachrichtigung erforderlich ist, kann einstellbar gestaltet sein.

Die Detektion von Mikroleckagen in besonders dicken Rohrleitungen hat den Vorteil, dass viele Rohrbrüche mit wesentlich gravierenderen Konsequenzen als einer Mikroleckage verhindert werden können. Ein Rohrbruch durch Materialschwäche, Rost oder dergleichen kündigt sich nämlich häufig durch kleinere Leckagen an. Die Materialschwäche kann so rechtzeitig vor dem Rohrbruch gefunden und ggf. behoben werden.

Es gibt Anwendungen, bei denen für einen gewissen Zeitraum eine möglichst hohe Durchflussrate erwünscht ist, während zu allen anderen Zeiten keinerlei Wasser fließen soll. Solche Anwendungen umfassen insbesondere das Befüllen von großen geschlossenen Wasserreservoirs, wie etwa Schwimmbädern, Brunnen oder Aquarien. Zu diesem Zweck ist eine Deaktivierung des Leckageschutzes für diesen Zeitraum vorgesehen. Zu allen anderen Zeiträumen kann die maximale Durchflussrate auf einen besonders geringen Wert geschaltet werden. Auch die Deaktivierung kann nicht nur am Steuergerät selber, sondern auch über eine Anwendung auf einem mobilen Endgerät erfolgen.

Die Verbrauchshistorie an den einzelnen Armaturen kann aufgezeichnet und ausgewertet werden. Aus der Verbrauchshistorie kann eine Zuordnung in bestimmte Verbrauchsklassen erfolgen. So kann beispielsweise eine Armatur, an der regelmäßig nur eine Durchflussrate von maximal 10 1/min gezapft wird, in eine entsprechende Klasse klassifiziert werden. Die einzustellende maximale Durchflussrate kann dann auf einen dieser Verbrauchsklasse entsprechenden Wert eingestellt werden. Auf diese Weise wird die Anpassung der maximalen Durchflussrate auf einen möglichst geringen Wert ermöglicht ohne den Verbraucher zu beschränken und unbeabsichtigte Absperrungen auszulösen. Eine möglichst niedrige maximale Durchflussrate ist als eingestellter Wert wünschenswert um den maximalen Schaden im Leckagefall zu begrenzen. Zusätzlich können aus der Verbrauchshistorie Zeiträume ermittelt werden, in denen regelmäßig keinerlei Wasser gezapft werden. Diese Zeiträume können dann zur Detektion von Mikroleckage mit Absperrung und Druckmessung verwendet werden.

Zusätzlich zu der Wasserinstallation mit Zapfstellen kann eine Leckage auch in Heizkreisläufen auftreten. Diese kann ebenfalls detektiert werden. Es kann daher ein zusätzliches Steuergerät an einer Heizungsarmatur in einem Heizkreislauf vorgesehen sein, mit dem Leckage in dem Heizkreislauf erfassbar ist.

Wie beschrieben ist es sinnvoll, bei Wohnungen in Mehrfamilienhäusern einen eigenen Leckageschutz für jede Wohnung vorzusehen. Es erfordert jedoch aufgrund der begrenzten Platzverhältnisse einen gewissen Aufwand, eine Leckageschutz-Armatur in der Wohnung zu installieren. Zusätzlich zu einer Leckageschutzarmatur werden gewöhnlich weitere Armaturen vorgesehen, wie Wasserzähler, Filter oder Druckminderer. Die Installation ist daher komplex und benötigt viel Raum.

Bei einer Ausgestaltung der Erfindung ist daher ein handelsüblicher, kommerziell verfügbarer und geeichter Wasserzähler mit Verbrauchsanzeige vorgesehen, und Mittel zum Übertragen eines die Wasserströmung repräsentierendes Signal von dem Wasserzähler an das Steuergerät. Dabei kann der Strömungszähler von dem Wasserzähler gebildet sein.

Ein solcher Wasserzähler dient zur Erfassung des Wasserverbrauchs für die Abrechnung des Versorgers. Zu diesem Zweck muss der Wasserzähler geeicht sein. Er wird in regelmäßigen Abständen ausgetauscht um die Zuverlässigkeit des Zählers zu gewährleisten. Der Wasserverbrauch kann an einer Anzeige abgelesen werden. Die Anzeige mit einem mechanischen Zählwerk wird über ein mechanisches Getriebe von einer Turbine innerhalb des Wasserzählers angetrieben, durch welche die gesamte Strömung geleitet wird. Der Wasserzähler ist kommerziell verfügbar und bildet eine als Ganzes in das Gehäuse der Armatur einsetzbare, geeichte Einheit.

Ein Ausführungsbeispiel der Erfindung nutzt einen solchen - ohnehin erforderlichen - Wasserzähler als Turbine zur Erfassung untypischer Strömungszustände. Zu diesem Zweck wird ein Reed Kontakt an der Turbine vorgesehen, mit welchem die Umdrehungen erfasst und ein elektrisches Signal erzeugt wird. Das Signal wird beispielsweise über eine Kabelverbindung an das Steuergerät übertragen. Dort kann es ausgewertet werden.

Bei einer alternativen Ausgestaltung der Erfindung ist der geeichte Wasserzähler zusätzlich zu einem nicht-geeichten Strömungsmesser vorgesehen. Die Integration des Wasserzählers in die Armatur hat den Vorteil, dass Verbrauchsergebnisse nicht mehr durch Personal persönlich vor Ort abgelesen werden muss. Vielmehr kann das Verbrauchsergebnis automatisch zu vorgegebenen oder ausgewählten Zeitpunkten an den zentralen Server übertragen werden. Dadurch wird der Fehler bei der Ablesung reduziert. Kosten für Personal wird gespart. Außerdem besteht die Möglichkeit, die redundanten Zähler hinsichtlich der Erfassungsqualität zu überprüfen.

Vorzugsweise ist bei der Leckageschutzanordnung ein Druckminderer stromabwärts des Wasserzählers angeordnet. Das ermöglicht die individuelle Einstellung des Wasserdrucks in jeder Wohnung. Die Integration des Druckminderers vermeidet zusätzlichen Installationsaufwand und spart Raum.

Die Anordnung kann als Stand-Alone-Anordnung betrieben werden. Es kann jedoch auch vorgesehen sein, dass die Steuergeräte untereinander, mit einem Master-Steuergerät oder mit einem Server kommunizieren.

Die Absperrung kann von einem Kugelhahn mit einer Kugel gebildet sein, wobei die Kugel eine Durchgangsbohrung mit einem Sieb aufweist. Dadurch wird eine besonders kompakte Anordnung erreicht. Das Armaturenteil kann ein Gehäuse mit einem verschließbaren Gehäusestutzen senkrecht zur Durchflussrichtung des Kugelhahns aufweisen, durch welchen ein Zugang zur Kugel des Kugelhahns herstellbar ist und das Sieb kann durch den Gehäusestutzen und eine Bohrung in der Kugel entfernbar und einsetzbar sein. Auf diese Weise kann das Sieb durch den Gehäusestutzen aus der Kugel entfernt werden. Es kann gereinigt werden und anschließend leicht wieder eingesetzt werden. Hierzu kann das Sieb einen aus der Kugel herausragenden Griff aufweisen. Vorzugsweise ist das Sieb und/oder ein den Gehäusestutzen verschließender Stopfen arretiert, wenn sich die Kugel in der Durchgangsstellung befindet und Wasser durch den Kugelhahn fließt. Wenn der Kugelhahn absperrt, wird die Arretierung aufgehoben und das Herausziehen des Siebs ermöglicht.

Vorzugsweise ist ein Rückflussverhinderer stromabwärts des Wasserzählers und/oder eines Druckminderers angeordnet. Die Rückflussverhinderer vermeiden, dass Wasser zurück in die Trinkwasserversorgung fließt, insbesondere, wenn eines der Bauteile gewartet oder ausgetauscht wird. Die Bauteile sitzen in einem eigenen, von außen zugänglichen Gehäusestutzen oder einer Gehäuseöffnung. Zur Wartung, Reinigung oder zum Austausch des Wasserzählers, des Druckminderers oder des Siebs wird die Absperrung geschlossen. Dann ist das jeweilige Bauteil gut zugänglich.

Ausgestaltungen der Erfindung sind Gegenstand der Unteransprüche. Ausführungsbeispiele sind nachstehend unter Bezugnahme der beigefügten Zeichnungen näher erläutert.

### Kurze Beschreibung der Zeichnungen

- Fig. 1: ist eine Übersicht über einen beispielhaften Modulbausatz aus verschiedenen Armaturenteilen für Leckageschutz und einem für alle Armaturenteile gleichen Steuerteil entsprechend einem ersten Ausführungsbeispiel.
- Fig.2: ist ein Querschnitt durch ein erstes Armaturenteil für Leckageschutz mit Wasserzähler zur Verwendung in einer Wohnung.
- Fig.3: ist ein Querschnitt durch ein zweites, alternatives Armaturenteil für Leckageschutz zur Installation in einer Rohrleitung.
- Fig.4: ist ein Querschnitt durch ein drittes Armaturenteil zur Vermeidung von Stagnation in einem Rohrleitungsabschnitt einer Wasserinstallation.
- Fig.5: ist ein Querschnitt durch ein viertes Armaturenteil für Leckageschutz mit einem Anschlussflansch zum Anschließen einer weiteren Armatur.
- Fig.6: ist eine perspektivische Darstellung des Armaturenteils aus Figur 5 mit Steuergerät.
- Fig.7: zeigt die Anordnung aus Figur 6 mit gelöstem Steuergerät.
- Fig.8: zeigt die Verbindungsstelle zwischen Armaturenteil und Steuergerät im Detail.
- Fig.9: zeigt einen Ausschnitt eines Querschnitts eines Armaturenteils mit einem Bypass vorbei an der Turbine im Detail.
- Fig.10: zeigt schematisch ein erstes Ausführungsbeispiel für den Einsatz der verschiedenen Armaturenteile in einem Mehrfamilienhaus.
- Fig.11: zeigt schematisch ein zweites Ausführungsbeispiel für den Einsatz von verschiedenen Armaturenteilen in einem Mehrfamilienhaus mit Schwimmbad.
- Fig.12: ist eine Übersicht über einen Modulbausatz aus verschiedenen Armaturenteilen für Leckageschutz und einem für alle Armaturenteile gleichen Steuerteil entsprechend einem zweiten Ausführungsbeispiel.
- Fig.13: ist eine perspektivische Darstellung eines Armaturenteils für Leckageschutz mit einem Anschlussflansch zum Anschließen einer weiteren Armatur.
- Fig.14: zeigt das Armaturenteil aus Figur 13 als Explosionsdarstellung.
- Fig.15: ist ein Querschnitt durch das Armaturenteil aus Figur 13.
- Fig.16: ist ein Armaturenteil zur Durchführung einer Hygienespülung zum Einbau unterhalb eines Waschbeckens.
- Fig.17: ist ein Armaturenteil zur Durchführung einer Hygienespülung zum Einbau in eine Rohrleitung.
- Fig.18: zeigt einen Feuchtigkeitssensor mit Steuergerät.
- Fig.19: ist eine Draufsicht auf ein Armaturenteil, bei dem die Strömung zur Verringerung des Strömungswiderstands in drei Teilströme aufgeteilt wird.
- Fig.20: ist eine perspektivische Darstellung des Armaturenteils aus Figur 19.
- Fig.21: ist eine Draufsicht auf ein Armaturenteil, bei dem die Strömung zur Verringerung des Strömungswiderstands in zwei Teilströme aufgeteilt wird.
- Fig.22: ist eine perspektivische Darstellung des Armaturenteils aus Figur 21.
- Fig.23: ist eine perspektivische Darstellung eines Armaturenteils zur Erfassung von Mikroleckagen in großen Rohrleitungen.
- Fig.24: ist ein Querschnitt durch den Rohrabschnitt des Armaturenteils aus Figur 23.
- Fig.25: ist eine teilweise in vertikaler Richtung geschnittene Ansicht durch das Armaturenteil aus Figur 23.
- Fig. 26: ist eine in horizontaler Richtung geschnittene Ansicht durch das Armaturenteil aus Figur 23.
- Fig. 27: ist ein Querschnitt entlang der Schnittebene A-A durch eine Leckageschutzanordnung mit Wasserzähler und Druckminderer entsprechend einem dritten Ausführungsbeispiel.
- Fig. 28: ist eine perspektivische Darstellung der Anordnung aus Figur 27.
- Fig.29: ist eine perspektivische, teilweise explodierte Darstellung der Anordnung aus Figur 27.
- Fig.30: ist eine Seitenansicht der Anordnung aus Figur 27.
- Fig.31: ist ein Detail aus Figur 27 mit dem Kugelhahn und Sieb.
- Fig. 32: ist eine Seitenansicht einer Leckageschutzanordnung mit Strömungsmesser und zusätzlichem Wasserzähler entsprechend einem vierten Ausführungsbeispiel.

### Beschreibung der Ausführungsbeispiele

### 1. Ausführungsbeispiel

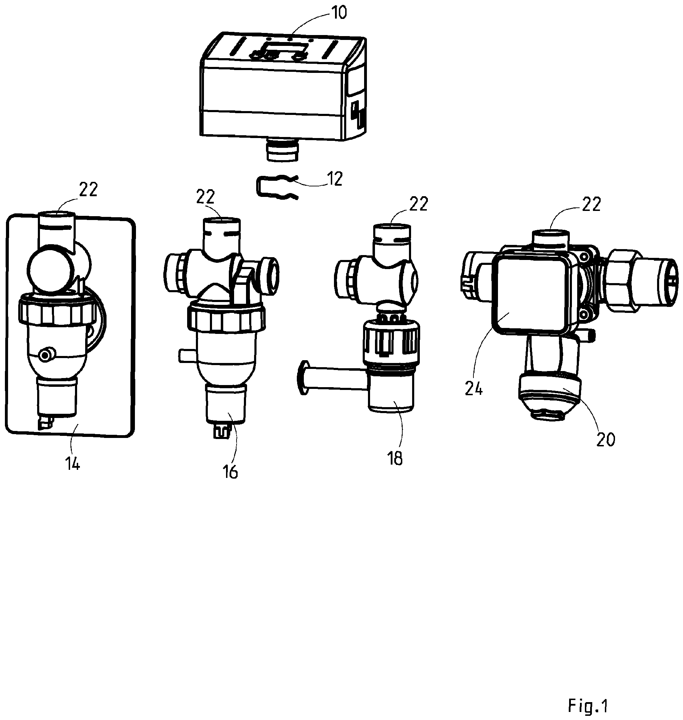

Figur 1 zeigt eine Übersicht über verschiedene Komponenten eines Modulbausatzes für Leckageschutz entsprechend einem ersten Ausführungsbeispiel der Erfindung. Ein für alle übrigen Module gleiches Steuergerät ist mit 10 bezeichnet. Das Steuergerät 10 wird mit einer Klammer 12 an einem der Armaturenteile 14, 16, 18 oder 20 befestigt. Entsprechend weisen die Armaturenteile 14, 16, 18 und 20 einen zugehörigen Anschluss 22 auf.

Die verschiedenen Armaturenteile sind für verschiedene Anwendungen vorgesehen. Das Armaturenteil 14 ist ein Adapterteil, welches in einem vertikalen Wasserversorgungsstrang eines mehrgeschossigen Gebäudes am Anschluss vor dem Wasserzähler eingebaut wird. Der Wasserzähler kann dann an dem Armaturenteil 14 angeschlossen werden.

Das Armaturenteil 16 ist ein kostengünstiges, einfach aufgebautes Armaturenteil, welches in eine gerade Rohrleitung eingesetzt wird. Das Armaturenteil 18 weist einen Ablauf auf. Es wird unter einem Waschbecken installiert und verbindet die Wasserversorgung mit dem Ablauf. Normalerweise ist die Verbindung mit einer Absperrung blockiert. Wenn jedoch längere Zeit kein Wasser gezapft wurde, wird die Absperrung geöffnet und eine Hygienespülung durchgeführt.

Das Armaturenteil 20 weist einen Anschlussflansch 24 auf. An diesem Anschlussflansch können weitere Armaturen angeflanscht werden. Beispielsweise kann ein Filter, ein Druckminderer oder eine Druckminderer-Filter-Kombination an den Flansch 24 angeflanscht werden. Solche zusätzlichen Armaturen sind nur am Hauseingangsanschluss erforderlich und nicht in den einzelnen Wohnungen eines Gebäudes. Entsprechend wird die etwas komplexere und teurere Armatur 20 im Allgemeinen nur am Hauseingangsanschluss mit der Trinkwasserversorgung eingesetzt.

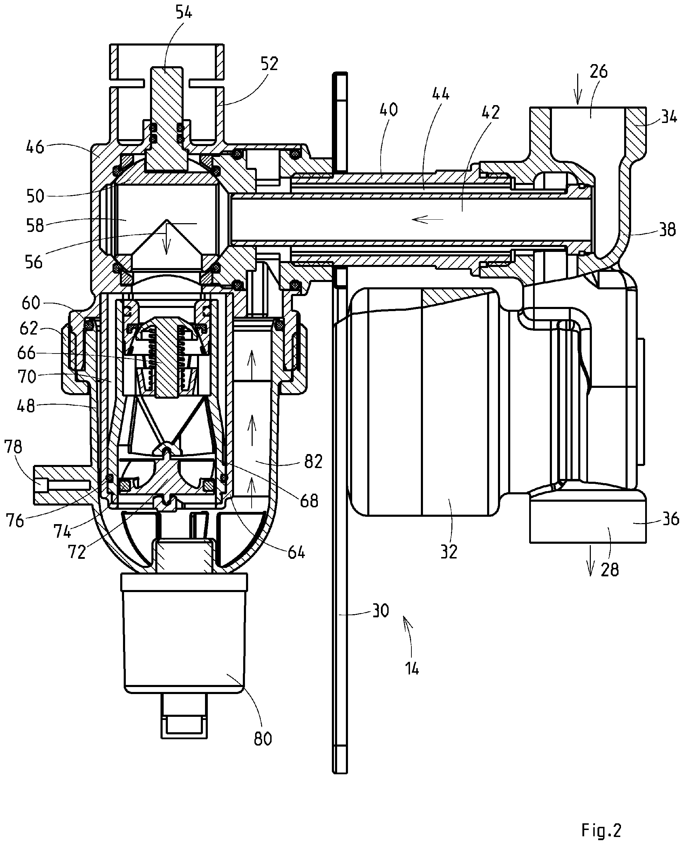

Figur 2 ist ein Querschnitt durch das Armaturenteil 14. Das Armaturenteil 14 wird in der vertikalen Rohrleitung eines mehrgeschossigen Gebäudes installiert. Es ersetzt die dort üblicherweise befindliche Absperrung mit Wasserzähler. Die - nicht dargestellte - Rohrleitung verläuft entlang einer Achse zwischen koaxialem Einlass 26 und Auslass 28. Die Rohrleitung kann beispielsweise hinter eine Wand oder Verkleidung mit einer Öffnung verlaufen. Die Anordnung 14 weist daher eine Abdeckplatte 30 auf, welche in der Wandebene verläuft. Vor dem Auslass 28 ist ein herkömmlicher Wasserzähler 32 mit Anzeige vorgesehen. Einlass 26 und Auslass 28 sind von Stutzen 34 und 36 gebildet. Die Stutzen 34 und 36 bilden Teil eines Anschlussstücks 38, an dem auch der Wasserzähler 32 vorgesehen ist. Das Anschlussstück 38 ist an einem langgestreckten Zwischenstück 40 angeschraubt. Das Zwischenstück 40 erstreckt sich durch die Abdeckplatte 30 hindurch. Der Einlass 26 ist mit einem inneren Kanal 42 in dem Zwischenstück 40 verbunden. Um den inneren Kanal 42 herum ist ein Ringkanal 44 vorgesehen. Der Ringkanal 44 ist mit dem Auslass 28 verbunden.

Auf der anderen Seite der Abdeckplatte 30 ist ein mehrteiliges Gehäuse mit Gehäuseteilen 46 und 48 auf das Zwischenstück 40 aufgeschraubt. Im Gehäuseteil 46 sitzt die Kugel 50 eines motorbetriebenen Kugelhahns. Auf der Oberseite ist das Gehäuseteil 46 mit einem Stutzen 52 versehen. Der Stutzen 52 bildet den Anschluss 22 für das Steuergerät 10. Das Steuergerät 10 weist einen Motor auf. Mit dem Motor wird die Kugel 50 über einen mit der Kugel 50 verbundenen Bolzen 54, der sich durch den Stutzen 52 hindurch erstreckt, angetrieben. Durch Drehen der Kugel 50 kann der innere Kanal 42 und somit die Wasserzufuhr abgesperrt werden.

Figur 2 zeigt die Kugel 50 in geöffneter Stellung. Wasser kann vom Einlass 26 durch den inneren Kanal 42 und durch einen gewinkelten Durchgang 58 in der Kugel 50 in Richtung des Pfeils 56 nach unten fließen. Der untere Gehäuseteil 48 ist mit einer Ringdichtung 60 in das obere Gehäuseteil 46 eingesteckt und mit einer Überwurfmutter 62 befestigt. Im unteren Gehäuseteil ist eine Hülse 64 aus Kunststoff angeordnet. Die Hülse verläuft koaxial zum Durchgang 58 in der Kugel 50, aber außeraxial zum unteren Gehäuseteil 48.

Koaxial in der Hülse 48 ist eine weitere, innere Hülse 68 angeordnet. In der inneren Hülse 68 ist ein Rückflussverhinderer 66 angeordnet. Der Rückflussverhinderer 66 ist als Patrone üblicher Bauart ausgebildet und braucht daher hier nicht weiter beschrieben werden. Der Rückflussverhinderer 66 öffnet nach unten in der Darstellung.

Die innere Hülse 68 ist nach oben konisch verjüngt. Dadurch ist im oberen Bereich zwischen den Hülsen 64 und 68 ein Ringraum 70 gebildet. Der Ringraum 70 ist mit einer Bypass-Bohrung 67 verbunden. Unterhalb des Rückflussverhinderers 66 ist eine Turbine 72 angeordnet. Zwischen Rückflussverhinderer und Turbine 72 sind Rippen angeordnet, die auch als Gegenlager für die Turbine dienen. Durch die Rippen wird ausreichend Bewegungsspielraum für den Hub des Ventilschließkörpers des Rückflussverhinderers 66 gebildet. Bei einer Wasserströmung dreht sich die Turbine. Die Turbine 72 ist im Randbereich mit kleinen Magneten 74 versehen. Ein Reed-Kontakt 76 registriert das Passieren der Magneten 74. Das Signal wird über einen Anschluss 78 an das Steuergerät 10 weitergeleitet. Aus der Anzahl der Signale kann die Wassermenge bestimmt werden, die durch die Turbine geflossen ist. Aus der Drehrate kann die Strömungsgeschwindigkeit ermittelt werden.

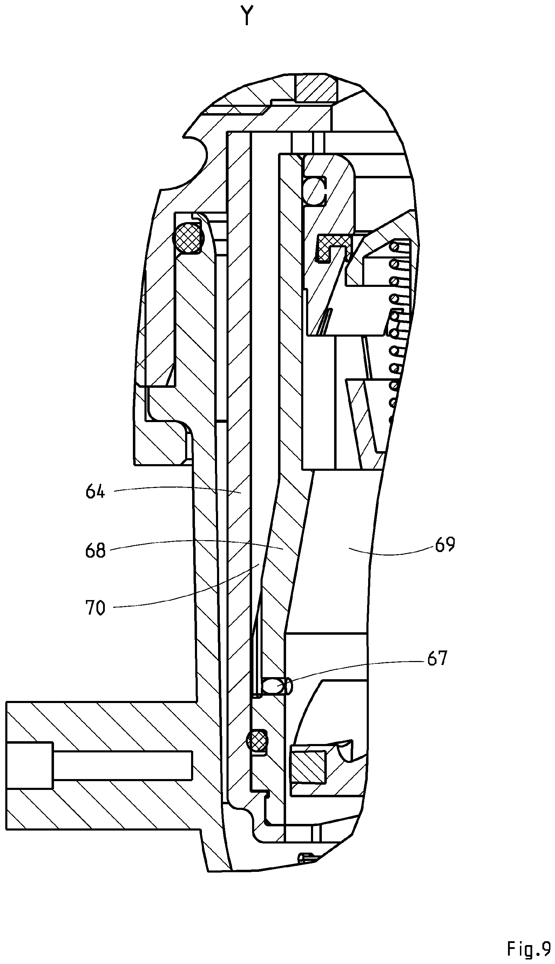

Figur 9 ist eine vergrößerte Darstellung des Bereichs um die Turbine 72 und den Rückflussverhinderer 66. Der Rückflussverhinderer 66 öffnet erst bei einer Mindest-Strömungsgeschwindigkeit. Um auch kleinere Strömungen mit der Turbine erfassen zu können, ist der Ringraum 70 zwischen der inneren Hülse 68 und der äußeren Hülse 64 über eine kleine Bypass-Bohrung 67 mit dem Bereich 69 zwischen Rückflussverhinderer 66 und Turbine 72 verbunden. Eine geringe Wassermenge kann auf diese Weise den Rückflussverhinderer 66 umgehen und trifft durch die Bohrung 67 direkt auf die Turbinenschaufeln der Turbine 72. Die Turbine wird so auch bereits bei Kleinstmengen angetrieben, die normalerweise nicht ausreichen würden um den Rückflussverhinderer zu öffnen.

Ganz unten im unteren Gehäuse 48 ist ein Drucksensor 80 angeordnet. Mit dem Drucksensor kann ein Druckabfall bei abgesperrter Anordnung erfasst werden. Mit der Turbine 72 und dem Drucksensor 80 können auf diese Weise Volumenstrom, Volumenstrom/Zeit, Dauer eines Volumenstroms und Druckabfall ermittelt werden. Das Steuergerät bzw. ein zentraler Server prüft, ob vorgegebene Schwellwerte erreicht werden und möglicherweise Leckage anzunehmen ist. Dann wird der Kugelhahn betätigt und die Wasserzufuhr abgesperrt.

Wasser, welches durch den Rückflussverhinderer gelangt und die Turbine passiert, fließt seitlich außen an der Hülse 64 vorbei durch eine Kammer 82 nach oben. Das ist durch Pfeile 84 repräsentiert. Die Kammer 82 ist an einer Öffnung 84 im oberen Gehäuseteil 46 mit dem Ringraum 44 im Zwischenstück 40 verbunden. Es fließt von dort zum Auslass 28.

Das Armaturenteil 14 kann ohne weiteres in bestehende Rohrleitungen mit Wasserzähler eingebaut werden. Es sind keine zusätzlichen Anschlüsse erforderlich. Die Armatur verwendet den bereits bestehenden Anschluss für den Wasserzähler und integriert den Wasserzähler in der Armatur.

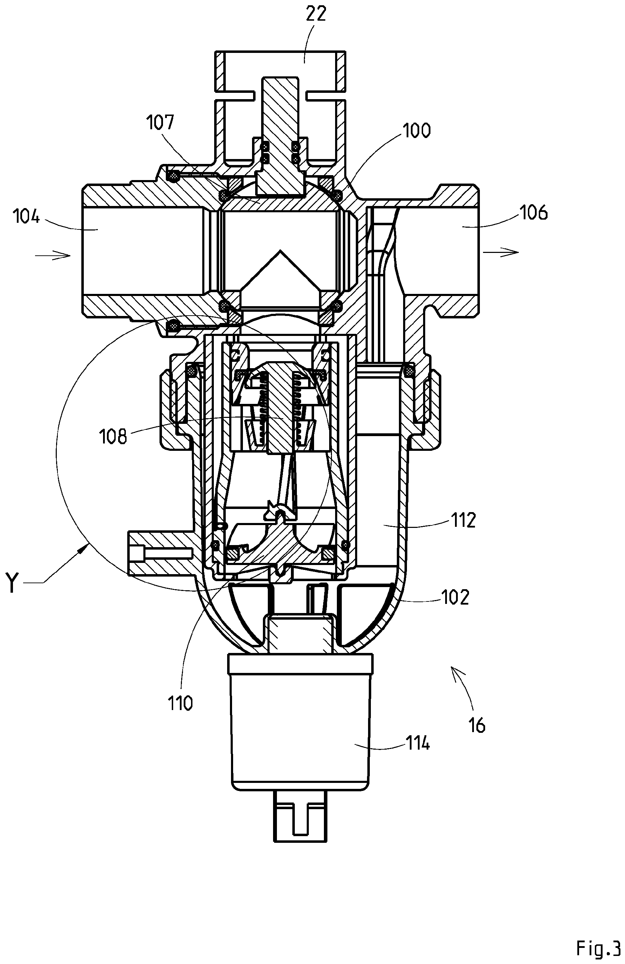

Ein alternatives, kostengünstiges Armaturenteil 16 ist in Figur 3 dargestellt. Das Armaturenteil 16 entspricht dem Armaturenteil 14, aber ohne Wasserzähler und Zwischenstück. Ein mehrteiliges Gehäuse besteht aus einem oberen Gehäuseteil 100 und einem unteren Gehäuseteil 102. Das obere Gehäuseteil 100 weist einen Einlass 104 und einen koaxialen Auslass 106 auf. Hinter dem Einlass 104 ist das bereits beschriebene Kugelhahn 107 angeordnet. Auch hier ist an der Oberseite ein Anschluss 22 für das Steuergerät. Das Wasser fließt vom Einlass 104 durch die Kugel 107, den Rückflussverhinderer 108 und die Turbine 110. Von dort fließt das Wasser durch eine Kammer 112 zum Auslass 106. Auch hier ist ein Drucksensor 114 am unteren Ende des unteren Gehäuseteils 102 vorgesehen. Das Armaturenteil 16 verwendet die gleichen Komponenten und hat lediglich andere Anschlüsse. Es ist besonders für die Verwendung für einzelne Zapfstellen oder Gruppen von Zapfstellen geeignet.

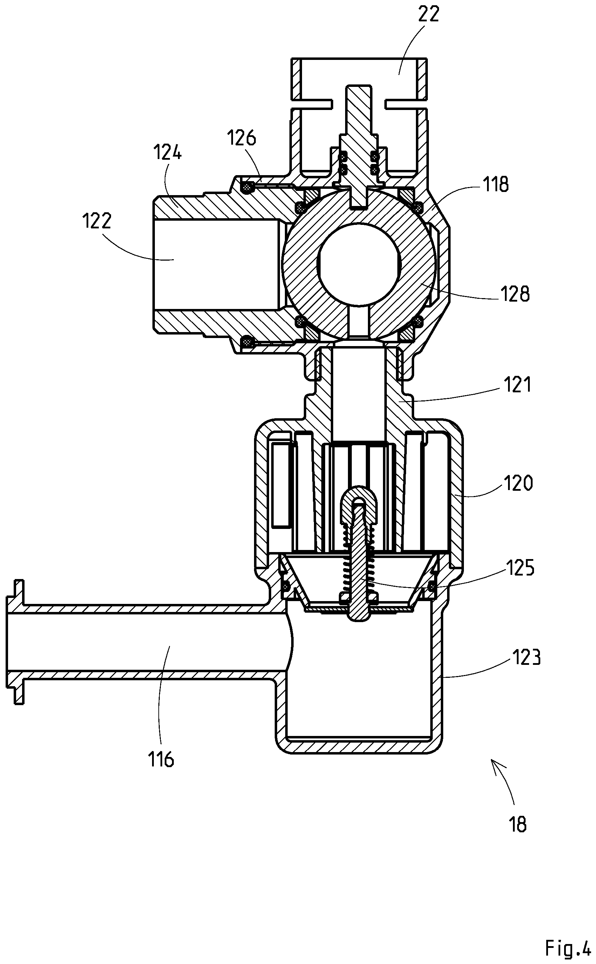

Das Steuergerät 10 kann auch zur Steuerung eines Armaturenteils für die Hygienespülung verwendet werden. Ein solches Armaturenteil ist in Figur 4 dargestellt und mit 18 bezeichnet. Es weist statt einer Turbine und eines Drucksensors einen Ablaufanschluss 116 auf. Ein mehrteiliges Gehäuse mit einem oberen Gehäuseteil 118 und einem unteren Gehäuseteil 120 weist am oberen Ende einen Einlass 122 auf. Der Einlass 122 ist von einem rohrförmigen Verbindungsteil 124 gebildet, dass in einen Einlassstutzen 126 am oberen Gehäuseteil 118 eingeschraubt ist. Der Einlass 122 wird an eine Wasserversorgung eines Waschbeckens angeschlossen. Oben am oberen Gehäuseteil 118 ist wie bei den bereits beschriebenen Armaturenteilen ein Anschluss 22 für ein Steuergerät 10 vorgesehen.

Hinter dem Einlass ist ein herkömmliches Kugelhahn 128 angeordnet. Das Kugelhahn 128 wird wie die oben bereits beschriebenen Kugelhahn e vom Motor im Steuergerät 10 betätigt. Unterhalb des Kugelhahn s ist das untere Gehäuseteil 120 in das obere Gehäuseteil 118 eingeschraubt. Am unteren Gehäuseteil 120 ist eine Ablaufanordnung mit der Verbindung zum Ablauf 116 angeordnet. Der Ablauf 116 ist mit einem Abwasserkanal verbunden und enthält in der Regel einen Syphon als Geruchsverschluss.

Die Ablaufanordnung umfasst einen oberen Ablaufkörper 121 und einen darunter befestigten Ablauftrichter 123. Der Ablaufkörper 121 und der Ablauftrichter 123 sind durch einen Klipsverschluss leicht lösbar miteinander verbunden. Eine zusätzliche Rücklaufsicherung 125 in Form eines nach unten öffnenden Ventils soll dann, wenn in der Ablaufleitung kein Syphon installiert ist, die Verbindung zu dem Abwasserkanal unterbrechen und damit Geruchsbelästigungen vermeiden. Es soll auch vermieden werden, dass Abwasser in der Ablaufleitung 116 ansteigen und über die Ablaufanordnung austreten kann.

Oberhalb des Ventils weist der Ablaufkörper 121 Rippen auf, die sich entlang dreier konzentrischer Ringe erstrecken. Zwischen den Rippen sind Öffnungen gebildet. Die Rippen sind so angeordnet, dass die Öffnungen eines Rings im Winkelbereich der Rippen der benachbarten Ringe gebildet sind. Weiterhin sind ein Teil der Rippen in radialer Richtung über Brücken mit benachbarten Ringen verbunden. Durch diese Konstruktion wird vermieden, dass Wasser aus den Öffnungen nach außen spritzen kann.

Das Armaturenteil 18 dieses Beispiels hat keine eigene Strömungsmessfunktion. Diese wird von einem der anderen Armaturenteile übernommen. Wenn über einen längeren Zeitraum, beispielsweise anwendungsabhängig 48, 72 oder 240 Stunden, kein Wasser entnommen wird, wird dies von einem der strömungsmessenden Armaturenteile detektiert. Dann erhält das Armaturenteil 18 über das Steuergerät 10 eine Steuerbefehl den normalerweise geschlossenen Kugelhahn zu öffnen. Wasser fließt vom Einlass 122 zum Ablauf 116. Auf diese Weise fließt Wasser durch alle Rohrleitungen vor dieser Armatur. Die Rohrleitungsinstallation wird gespült und die Bildung von Keimen durch stagnierendes Wasser wird vermieden. Nach einem gewissen Zeitraum oder einer vorgegebenen Spülwassermenge wird der Kugelhahn 128 wieder geschlossen.

Das Armaturenteil 18 kann überall dort installiert werden, wo eine Wasserversorgungsleitung und ein Ablauf dicht beieinander liegen. Eine besonders geeignete Stelle ist unterhalb von Waschbecken. Der Einlass 122 wird mit der Wasserversorgung verbunden.

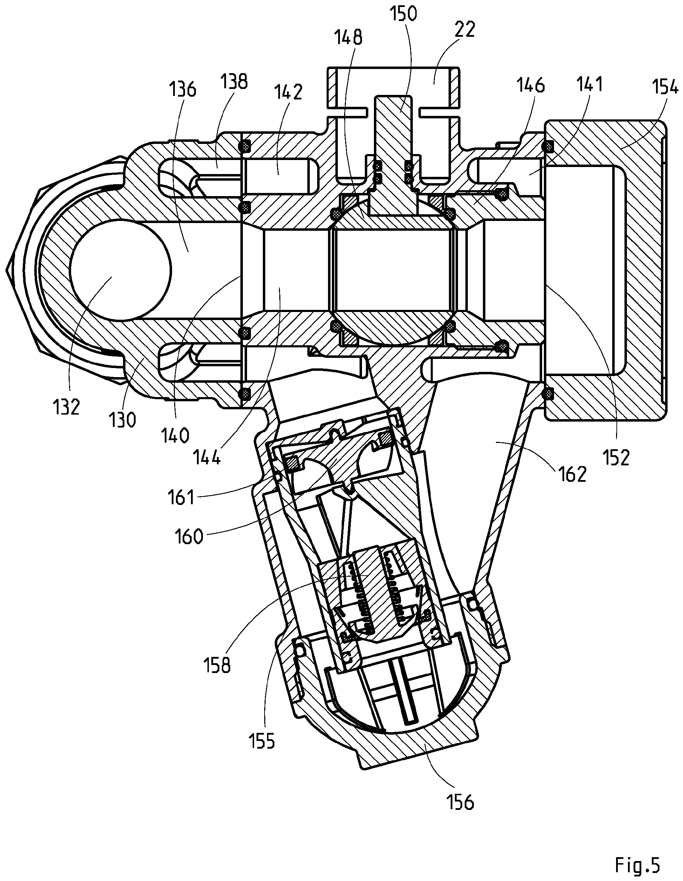

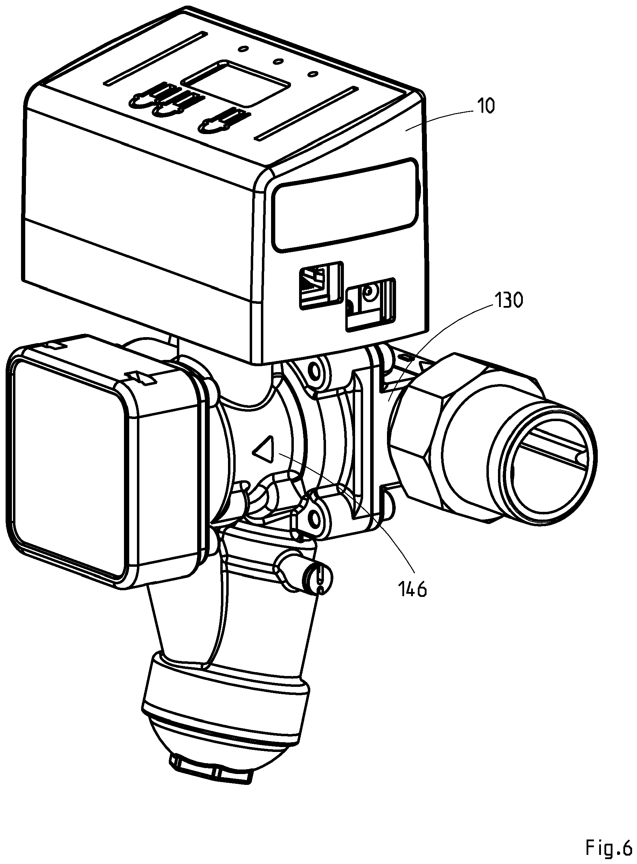

Figuren 5, 6 und 7 zeigen eine etwas komplexere Leckageschutzarmatur 20. Dieses Armaturenteil 20 umfasst mehrere Gehäuseteile. Ein erstes Gehäuseteil 130 ist als Rohranschlussteil ausgebildet. Derartige Rohranschlussteile sind bekannt. Es weist einen Einlass 132 und einen koaxialen Auslass 134 auf der gegenüberliegenden Seite des Rohranschlussteils auf. Das Rohranschlussteil 130 wird in eine gerade Rohrleitung (nicht dargestellt) eingebaut. Der Einlass 132 mündet in einem zentralen Kanal 136. Um den zentralen Kanal 136 herum ist ein Ringkanal 138 vorgesehen. Der Ringkanal 138 ist mit dem Auslass verbunden. Zentraler Kanal 136 und Ringkanal 138 sind an einem Anschlussflansch 140 mit korrespondierenden Kanälen 142 und 144 eines mittleren Gehäuseteils 146 verbunden.

In dem mittleren Gehäuseteil 146 ist ein Kugelhahn 148 im zentralen Kanal 144 angeordnet. Mit dem Kugelhahn 148 kann die Wasserzufuhr unterbrochen werden. Hierzu ist wie bei allen oben beschriebenen Anordnungen ein Anschluss 22 für ein Steuergerät 10 mit Motor und ein Bolzen 150 zum Betätigen des Kugelhahns mit dem Motor vorgesehen. Bei geöffnetem Kugelhahn, wie dies in Figur 5 dargestellt ist, fließt das Wasser durch das mittlere Gehäuseteil 146 hindurch zu einem weiteren Anschlussflansch 152. Im vorliegenden Ausführungsbeispiel ist der Anschlussflansch 152 mit einer einfachen Kappe 154 verschlossen. Der zentrale Kanal 144 ist entsprechend direkt mit einem Ringkanal 141 verbunden. Der Anschlussflansch 152 ermöglicht aber das einfache Anschließen weiterer Armaturen. Solche Armaturen können insbesondere Filter, Druckminderer, Druckminderer-Filter-Kombinationen oder Enthärtungsanlagen sein, wie sie am Hauswassereingang häufig eingesetzt werden.

Der Ringkanal 141 ist im unteren Bereich über einen Kanal 162 des mittleren Gehäuseteils 146 mit einer Strömungsmessanordnung verbunden. Ein nach unten ragender Stutzen 155 ist an das mittlere Gehäuseteil 146 angeformt. Der Stutzen 155 ist mit einer Kappe 156 verschlossen. In dem Stutzen ist ein Rückflussverhinderer 158 und eine Turbine 160 für die Strömungsmessung angeordnet. Der Stutzen 154 mündet im auslassseitigen Bereich des Ringkanals 142. Wasser fließt also vom zentralen Kanal 140 durch den Kugelhahn 148. Von dort gelangt es in den Ringkanal 141 und anschließend in den Kanal 162. Es passiert den Rückflussverhinderer 158 und die Turbine 160 und fließt durch den Ringkanal 142 zum Auslass, wo es zur weiteren Verwendung zur Verfügung steht. Die mit einem Reed-Kontakt erfassten Signale der Magneten 161 an der Turbine 160 werden in bekannter Weise an das Steuergerät geleitet und dort oder in einem zentralen Server ausgewertet.

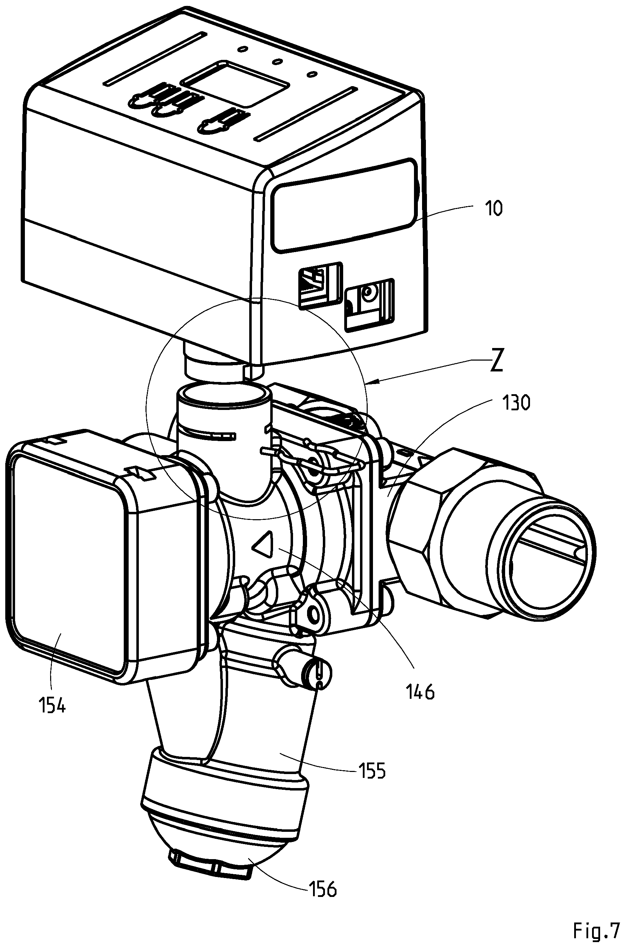

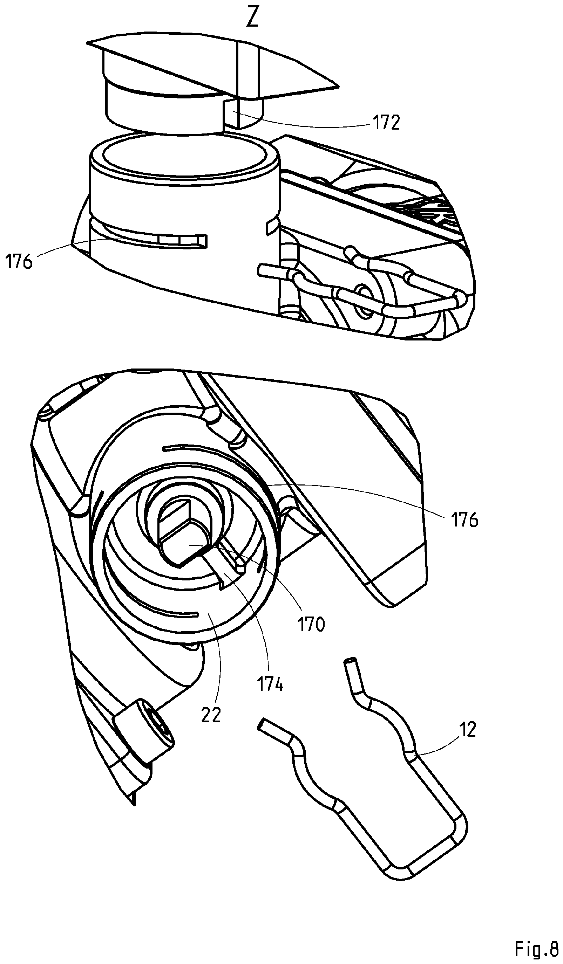

Jedes der oben beschriebenen Armaturenteile 14, 16, 18 und 20 weist einen Anschluss 22 für das Steuergerät 10 auf. Der Anschluss 22 ist in Figur 8 noch einmal im Detail dargestellt. Der Bolzen 54 bzw. 150 zum Betätigen der Kugel des Kugelhahns ist am oberen Ende mit einem Profil 170 versehen. Das Steuergerät 10 mit dem Motor greift an diesem Profil an. Eine Nut 172 greift in einen korrespondierenden Vorsprung 174. Auf diese Weise wird die Verbindung zwischen Steuergerät 10 und Armaturenteil unverdrehbar und mit definierter Kugelstellung hergestellt. Die Verbindung wird auf die in Figur 7 erkennbare Weise mit der in Durchbrüche 176 eingreifenden Klammer 12 gesichert.

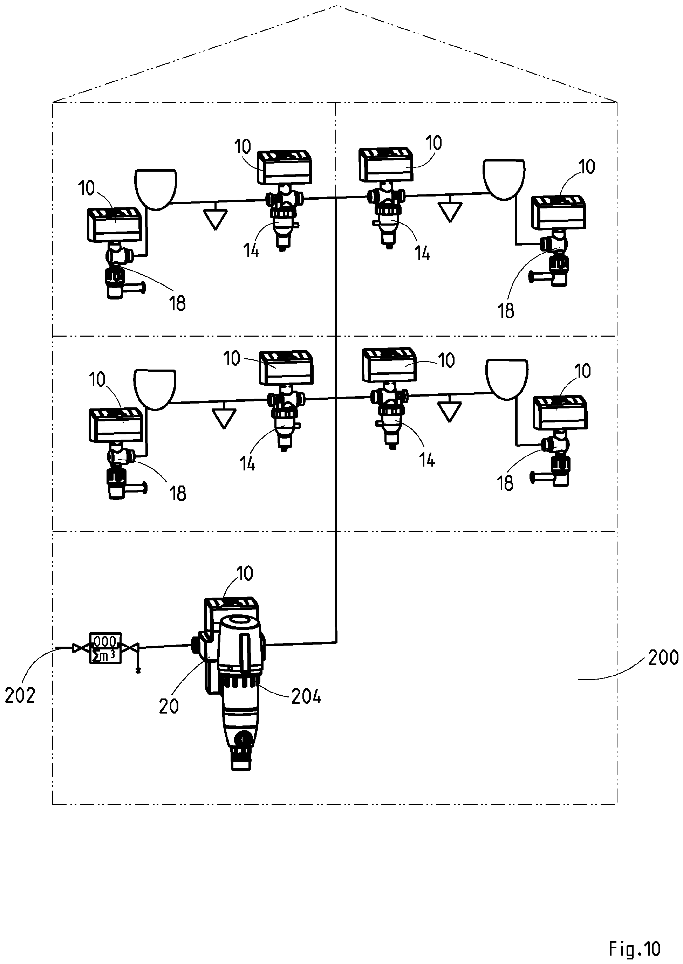

Das Steuergerät 10 ist mit einem Sender-Empfänger ausgestattet, welcher über ein Mobilfunknetz eine Verbindung zum Internet herstellt. Über das Internet kann so eine Verbindung mit einem zentralen Server hergestellt werden. Figur 10 illustriert schematisch, wie die verschiedenen, oben beschriebenen Komponenten zu einer Leckageschutzanordnung in einem einfachen Mehrfamilienhaus eingesetzt werden können. Es versteht sich, dass dies nur exemplarisch ist und größere oder kleinere Einheiten ebenso denkbar sind.

Um eine möglichst effektive Anordnung zu erreichen, ist eine sorgfältige Planung erforderlich. Dabei werden die Durchflussraten in einzelnen Abschnitten geschätzt oder gemessen und die Anzahl, Art und Verteilung der Armaturen derart geplant, dass an keiner Stelle besonders hohe Durchflussraten erlaubt werden müssen, ohne dass gleichzeitig die Herkunft des Durchflusses an den dahinterliegenden Armaturen lokalisiert werden kann. Dabei werden auch wirtschaftliche Aspekte berücksichtigt und es wird ein Optimum zwischen der Anzahl der erforderlichen Komponenten und der Größe des potentiell durch Leckage verursachten Schadens gefunden. Ein Ziel kann es beispielsweise sein, den maximalen Schaden auf 100 Liter zu begrenzen. Ein solcher Schaden kann vergleichsweise einfach beseitigt werden und dringt nicht durch Gebäudeteile o.ä.

Das in Figur 10 dargestellte Haus 200 weist einen Hauseingang für Trinkwasser 202 auf. Hydraulisch hinter dem Hauseingang ist ein Armaturenteil 20 mit Steuergerät 10 und Druckminderer-Filterkombination 204 installiert. Weitere Filter oder Druckminderer sind dadurch im Gebäude nicht mehr erforderlich. An den weiteren Stellen sind einfachere, kostengünstigere Geräte möglich. Jede Wohnung bzw. jeder Wohnungskomplex ist ferner individuell mit einem Armaturenteil 14 oder 16 und einem zugehörigen Steuergerät 10 ausgestattet. Ein Armaturenteil 18 mit Steuergerät 10 ist ebenfalls in jeder Wohnung bzw. in jedem Wohnungskomplex unterhalb des hydraulisch am entferntesten zum Armaturenteil 14 bzw. 16 liegenden Waschbeckens installiert.

Zum Installieren einer Anordnung wird zunächst das Armaturenteil an die Rohrleitung angeschlossen. Ansonsten erhält das Steuergerät keine Werte. Anschließend wird das Steuergerät 10 an eine Stromversorgung angeschlossen. Für den Fall, dass der Strom ausfällt, ist weiterhin eine Notromversorgung mit Akkumulatoren oder Batterien vorgesehen. Diese werden regelmäßig während der Wartung ausgetauscht. Die Internetverbindung des Steuergerätes 10 wird direkt mittels einer eigenen SIM-Karte über ein Mobilfunknetz hergestellt.

Die temporäre IP-Adresse des Steuergerätes 10 wird selbstständig an einen zentralen Server übermittelt. Weiterhin meldet der Wohnungsbesitzer oder sein Installateur das Gerät über ein Internet-Portal an. Hierzu ist ein Code oder ein Identifikationszeichen sichtbar auf dem Gerät angebracht. Das Zeichen kann mittels Kamera an einem mobilen Endgerät eingelesen und direkt an das Internet-Portal übertragen werden.

Der Server verwaltet alle relevanten Daten. Die Verwaltungssoftware liegt auf dem Server und kann vom Hersteller auf einfache Weise gewartet und verbessert werden. Das Steuergerät 10 erfordert keine weiteren Installationsschritte oder Wartungsaufwand. Dadurch wird es möglich, die Installation durch den in IT-Angelegenheiten häufig unerfahrenen Installateur durchzuführen ohne einen IT-Fachmann hinzuziehen zu müssen. Der Hardware-Aufwand ist gering.

Der Installateur oder der Wohnungsbesitzer kann über ein eigenes Internetportal die für die Anwendung geeigneten Parameter selbstständig eingeben. Zu den Parametern gehören das Ein- und Ausschalten des Urlaubsmodus, Einstellen der Schwellwerte für Volumenstrom, Volumenstrom pro Zeit, maximale Dauer eines Volumenstroms und Druckabfall. Diese Daten sind auf dem Server auch dann gesichert, wenn ein Steuergerät 10 nicht mehr funktionstüchtig ist. Dadurch ist der Wechsel auf ein anderes, identisches Gerät besonders leicht möglich. Der Hersteller kann die verschiedenen Betriebsparameter und sonstige Daten statistisch auswerten. Dadurch kann der Herstellungsprozess optimiert werden. Falls die Parameter direkt am Steuergerät 10 eingegeben werden, werden auch diese neuen Daten an den Server übertragen.

Der Zugang zu dem Internet-Portal kann auf herkömmliche Weise an einem PC oder über eine geeignete Anwendungssoftware (App) auf einem Smartphone erfolgen. Letzteres kann auch als Adresse für Mitteilungen über Störungen verwendet werden. Diese oder eine andere Adresse für Mitteilungen über Störungen kann für das jeweilige Projekt über das Internet-Portal eingestellt werden. Vorteilhafterweise werden alle Projekte eines Anwenders in einer Übersicht dargestellt, so dass der Anwender sich nur einmal einloggen muss und anschließend jedes Projekt einzeln verwalten kann.

Da für jede Wohnung oder jeden Wohnungskomplex eine eigene Leckageüberwachung erfolgt, kann dort auch eine individuelle Urlaubsschaltung eingerichtet werden. Die Toleranzen können geringer gewählt werden, so dass der Schaden bei Leckage geringer gehalten werden kann. Wenn eine besonders große Menge gezapft wird, prüft das Steuergerät 10 am Hauseingang zunächst, ob der Volumenstrom aus einer Wohnung oder aus verschiedenen Wohnungen kommt. Im letzteren Fall liegt möglicherweise keine Leckage vor und eine Absperrung wird vermieden. Leckage kann durch die Verwendung einer Vielzahl von Leckageschutzarmaturen besser lokalisiert und daher schneller gefunden werden. Die übrigen Gebäudeteile bleiben unbeeinflusst, da auch die Absperrung lokal erfolgt.

Die Verbindung zwischen den Steuergeräten und dem Server besteht nur temporär und ist nicht als dauernde Leitung ausgebildet. Dadurch wird vermieden, dass diese von Störern oder Hackern beeinflusst werden kann. Die Daten werden in kurzen Abständen von beispielsweise 15 oder 120 Sekunden an den Server geschickt. Der Server prüft die Daten darauf, ob Leckage vorliegt. Die Daten werden in einer dynamischen Datenbank gespeichert und ggf. mit einer Änderung zurückgeschickt. Durch die Verwaltung aller Steuergeräte eines Gebäudes kann die maximale Durchflussmenge am Hauseingang hoch eingestellt werden und dennoch der Schaden begrenzt werden. Es wird bei großen Durchflussmengen geprüft, woher diese kommen und eine Absperrung erfolgt nur, wenn die dahinter liegenden Steuergeräte keinen Durchfluss melden.

Wenn eine Leckagearmatur über einen längeren Zeitraum, anwendungsabhängig etwa 48, 72 oder 240 Stunden, keinen Volumenstrom detektiert, wird automatisch eine Hygienespülung ausgelöst. Hierzu wird ein Steuersignal direkt vom Steuergerät 14 der Leckagearmatur oder über den Server an das Steuergerät 10 einer Hygienearmatur 18 gesandt. Das Steuergerät 10 öffnet mit dem Motor das Kugelhahn 128. Dann fließt Wasser durch alle davor liegenden Rohrleitungen zum Abfluss des Waschbeckens unter dem die Armatur 18 installiert ist. Auf diese Weise wird Stagnation und die damit möglicherweise verbundene Keimbildung vermieden.

Das vorstehend beschriebene Ausführungsbeispiel wurde konkret beschrieben. Es versteht sich, dass die Übertragungswege - drahtlos oder verdrahtet - beliebig gewählt werden können. Auch ist es für die Durchführung der Erfindung nicht zwingend erforderlich, einen zentralen Server einzurichten. Vielmehr kann diese Funktion auch beispielsweise von einem der Steuergeräte übernommen werden. Die Gruppierung der Zapfstellen ist beliebig und abhängig vom Anwendungsfall. So kann es sinnvoll sein, jede Zapfstelle einzeln zu überwachen, während in anderen Anwendungen eine Gruppe von Wohnungen mit jeweils mehreren Zapfstellen überwacht werden.

Je nach hydraulischer Situation werden die Armaturen sowohl in Warm- als auch in Kaltleitungen eingebaut. Dies ist insbesondere bei einer zentralen Warmwasserversorgung sinnvoll. Zusätzlich zu den Drucksensoren können Temperatursensoren in den Armaturen vorgesehen sein. Die Temperatursensoren ermöglichen die Überwachung des unteren Temperaturlimits von beispielsweise 55 Grad für Warmwasser und oberen Temperaturlimits von beispielsweise 25 Grad Celsius um die Bildung von Legionellen oder ähnlichen Keimen und Mikroorganismen zu verhindern.

### 2. Ausführungsbeispiel

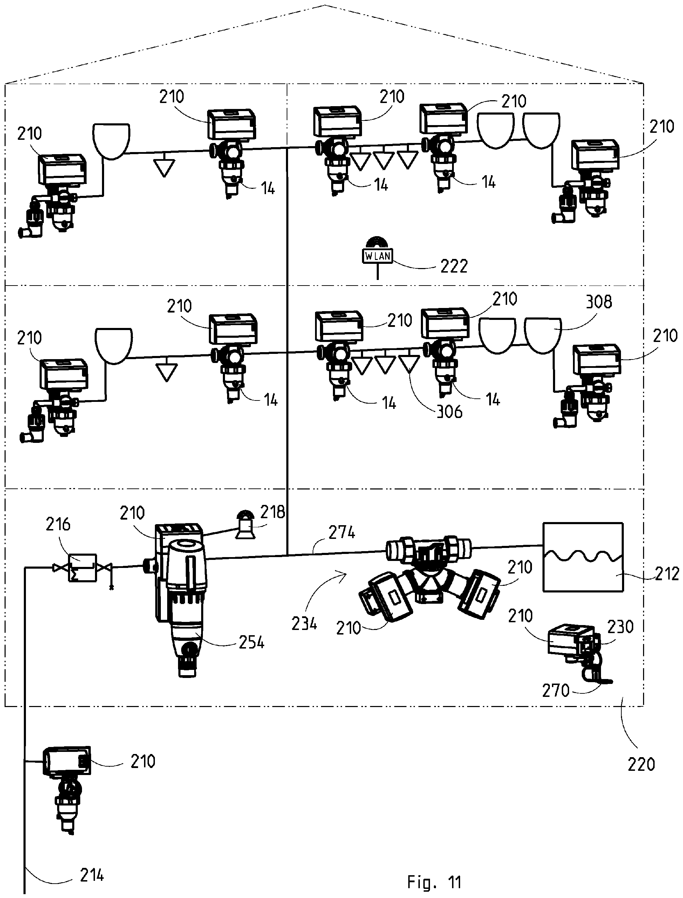

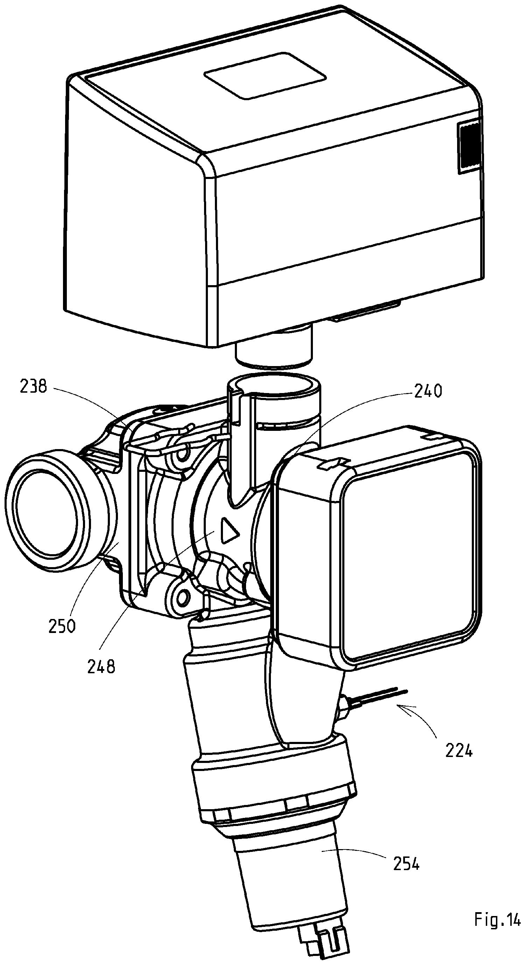

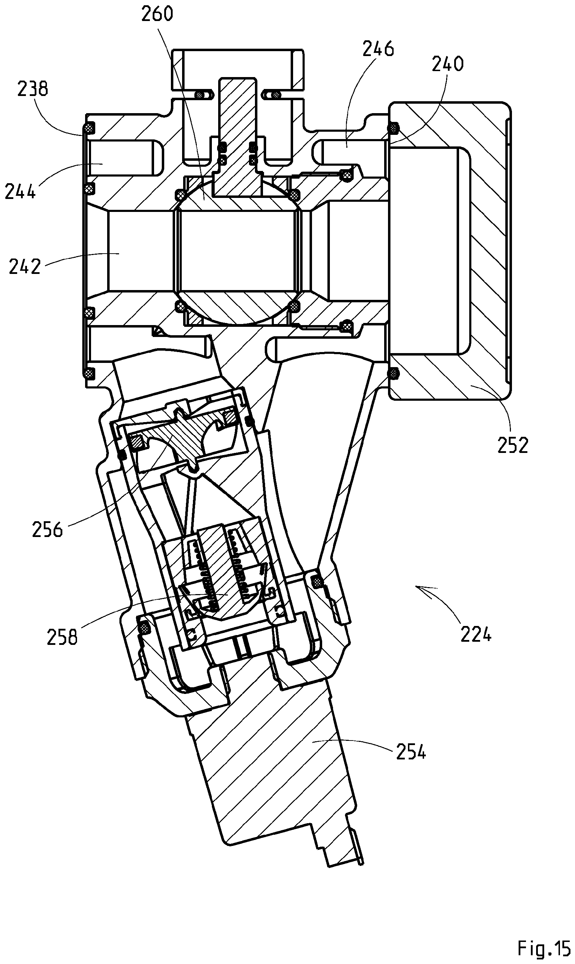

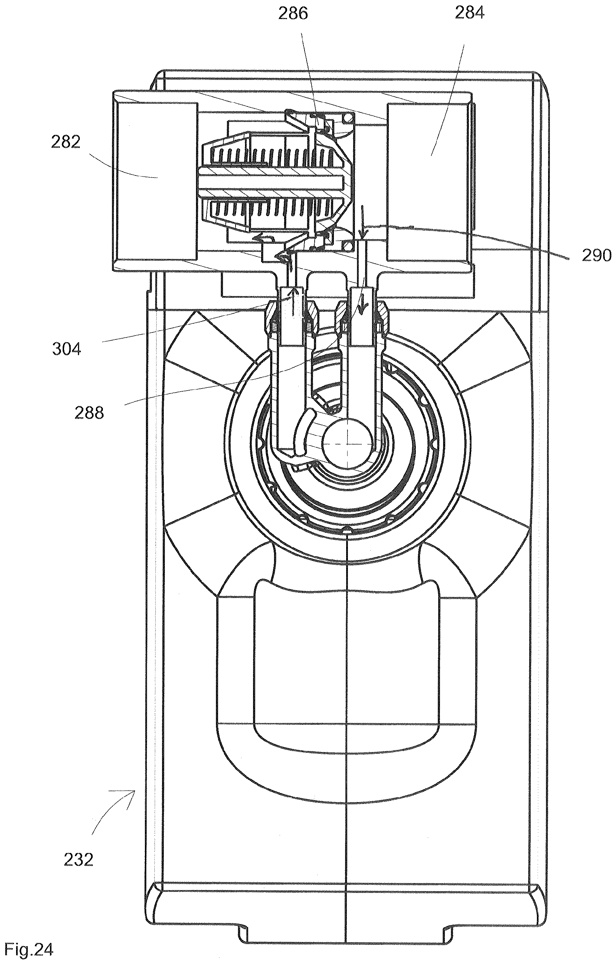

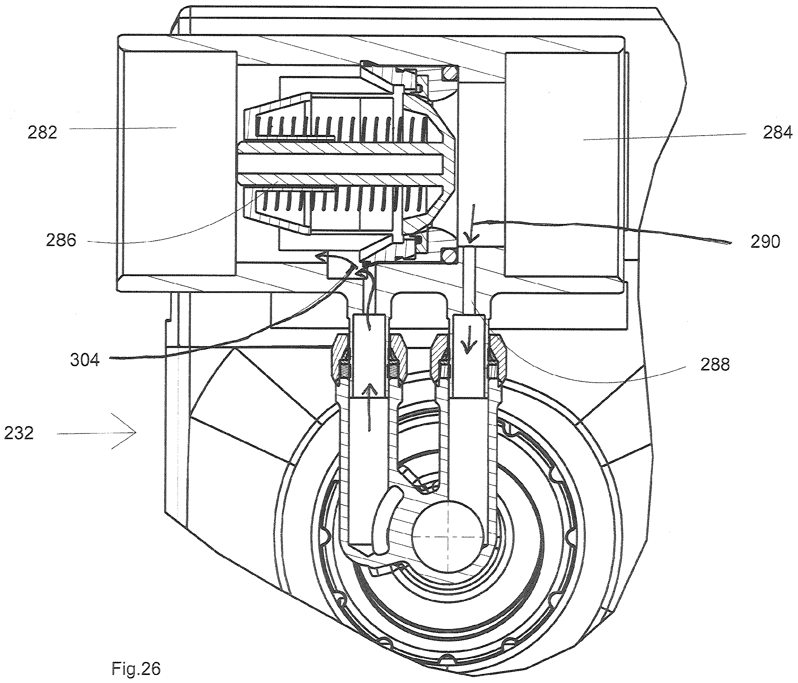

Figuren 11 bis 26 zeigen ein weiteres Ausführungsbeispiel in Form eines komplexeren Gebäudes 220 mit besonderen Anforderungen. Während hier auch alle in den Figuren 1 bis 10 beschriebenen Armaturen14, 16, 18 und 20 und Steuereinrichtungen 10 mit dem zugehörigen Netzwerk verwendet werden können, werden weitere Armaturen mit zusätzlichen Eigenschaften eingesetzt und alternative Armaturen und Steuergeräte dargestellt.

Das Gebäude 220 ist nur eines einer Ansammlung von mehreren Gebäuden. Eine Hauptleitung 214 mit großem Durchmesser und entsprechend hoher Kapazität führt vom Versorger zum Gebäudeeingang. Das Gebäude 220 weist einen Hauptwasserzähler 216 in Form einer Turbine auf, mit der das gesamte durch die Hauptleitung 214 fließende Wasser erfasst wird. In dem Gebäude ist ein Schwimmbad 212 vorgesehen, das auf- oder nachgefüllt wird.

Das Steuergerät 210 ist mit einer Kommunikationseinrichtung ausgestattet, welche anders als das Steuergerät 10 über ein Kabel oder ein WLAN eine Verbindung zum Internet herstellt. Über das Internet kann eine Verbindung mit einem zentralen Server hergestellt werden. Figur 11 illustriert schematisch, wie die verschiedenen, oben beschriebenen Komponenten zu einer Leckageschutzanordnung in dem Gebäude eingesetzt werden können. Es versteht sich, dass dies nur exemplarisch ist und größere oder kleinere Einheiten ebenso denkbar sind.

Zum Installieren einer Anordnung wird zunächst jedes Armaturenteil an die Rohrleitung angeschlossen. Ansonsten erhält das Steuergerät 210 keine Werte. Anschließend wird das Steuergerät 210 an eine Stromversorgung angeschlossen. Batterien oder Akkumulatoren sind als Notstromversorgung vorgesehen, die bei der regelmäßigen Wartung ausgetauscht werden. Die Internetverbindung des Steuergerätes 210 wird vorzugsweise über ein Kabel hergestellt, da eine WLAN-Verbindung möglicherweise nicht stabil ist. Steht kein Kabelanschluss für das Internet zur Verfügung, kann ein WLAN-Gerät 218 mit einem Display und einer Eingabeeinrichtung in Form einer Tastatur über ein Kabel angeschlossen werden. Die Tastatur ist insbesondere für die Eingabe eines Zugangscodes bei einem verschlüsselten WLAN 222 erforderlich. Falls auch kein WLAN im Bereich eines Gerätes verfügbar ist, besteht die Möglichkeit, einen Internetanschluss mit einem devolo-Gerät (www.devolo.de) oder einem vergleichbaren Gerät über das Stromnetz herzustellen. Da diese Technologie allgemein bekannt ist, wird hier auf eine nähere Darstellung verzichtet.

Zur Vermeidung von Problemen mit der Firewall des Internetanschlusses werden relevante Daten zunächst nur vom Steuergerät 210 zum Server gesendet. Der Server hat dann die Gelegenheit Befehle, insbesondere den Befehl "Absperren" als Anhang dieser Mitteilung zurückzusenden ohne dass die Firewall die Mitteilung abwehrt.

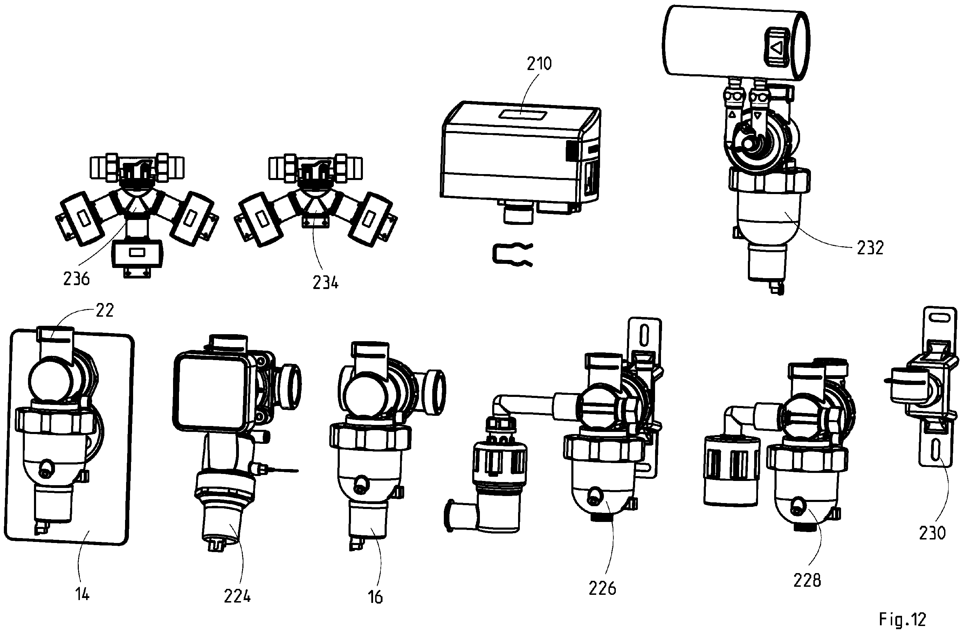

Figur 12 ist eine Übersichtsdarstellung analog zu Figur 1, welche die verschiedenen Komponenten auflistet, die im Gebäude 220 verwendet wurden. Auch hier werden einfache Armaturen 14 und 16 eingesetzt, die oben bereits anhand des ersten Ausführungsbeispiels ausführlich beschrieben wurden. Diese sind unverändert. Während Figur 10 und 11 ausschließlich den Einsatz von Armaturen 14 zeigen, versteht es sich, dass je nach den Einbaubedingungen eine Armatur 16 gleichwertig an dieser Position eingesetzt werden kann.

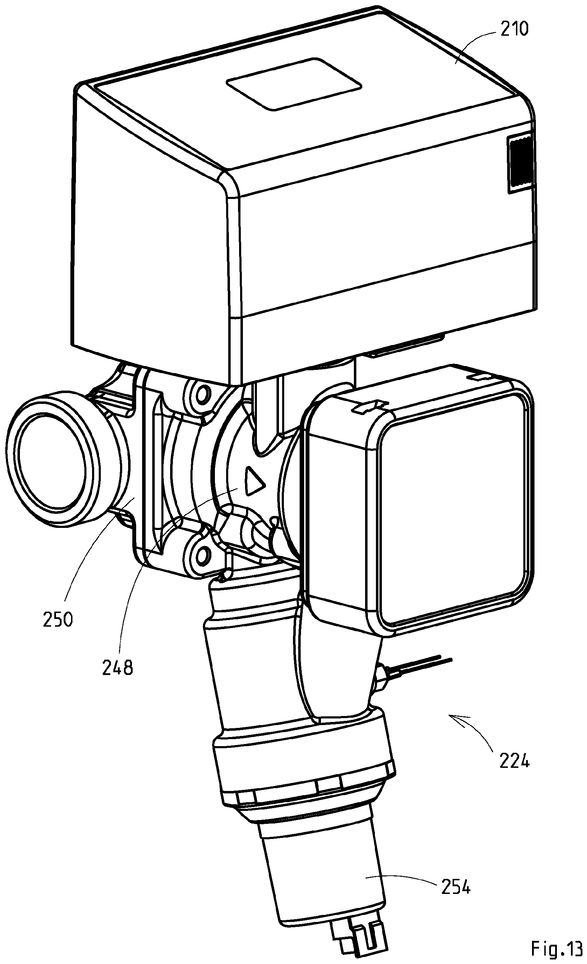

Bezugszeichen 224 bezeichnet eine Anordnung mit der gleichen Funktion wie die Anordnung 20, wobei jedoch zusätzlich ein Drucksensor vorgesehen ist. Die Anordnung 224 dient als sogenannter Master und kann mit weiteren Komponenten, etwa einer Druckminderer-FilterAnordnung versehen werden. Sie ist anhand der Figuren 13 bis 15 nachstehend ausführlich beschrieben.

Eine alternative Anordnung zur Durchführung einer Hygienespülung ist mit 226 bezeichnet. Anders als die im ersten Ausführungsbeispiel beschriebene Anordnung ist das Armaturenteil 226 mit einem eigenen Strömungsmesser in Form einer Turbine versehen. Sie ist an einer Wandhalterung befestigt und mit dem Abfluss eines Waschbeckens verbindbar.

Auch die Anordnung 228 ist eine Anordnung zur Durchführung einer Hygienespülung. Diese Anordnung weist einen Ablauftrichter auf, der oberhalb eines Waschbeckens oder anderen geeigneten Ablauf angeordnet werden kann. Die Anordnung 228 wird ohne Wandhalterung in eine Rohrleitung integriert.

Mit 230 ist eine Anordnung bezeichnet, mit der ein Steuergerät 210 an einer Wandhalterung befestigt werden kann. Das Steuergerät 210 ist über ein langes Kabel mit einem Feuchtigkeitssensor verbunden und liefert Informationen an den Server über Feuchtigkeit aus anderen Quellen, etwa Regenwasser, das nicht aus der überwachten Wasserinstallation leckt.

Die Anordnung 232 (hier mit Steuergerät dargestellt) dient zur Ermittlung von Mikroleckage in besonders großen Rohrleitungen, die mit der dort zur Strömungsmessung eingesetzten Turbine nicht erfassbar sind.

Mit 234 und 236 sind Armaturenteile (ebenfalls mit Steuergerät dargestellt) bezeichnet, bei denen die Strömung in zwei bzw. drei Teilströme aufgeteilt wird um bei großen Durchflussraten den Strömungswiderstand und den Druckverlust zu verringern.

Alle in Figur 12 dargestellten Komponenten werden in der in Figur 11 dargestellten Anwendung eingesetzt.

Das als Master eingesetzte Armaturenteil 224 ist in den Figuren 13 bis 15 im Detail dargestellt. Das Armaturenteil 224 weist einen ersten Gehäuseteil 248 mit zwei Flanschen 238 und 240 mit einem Zentralkanal 242 und darumliegenden Ringkanälen 244 bzw. 246 auf. Mit einem der Flansche 238 oder 240 wird das erste Gehäuseteil 248 an ein Rohranschlussteil 250 angeflanscht. Die Auswahl des Flansches hat keinen Einfluss auf die Funktion der Anordnung und richtet sich nach den Einbaubedingungen (rechts-links-Einbau). Im vorliegenden Ausführungsbeispiel wurde das Rohranschlussteil 250 am Flansch 238 angeflanscht und der freie Flansch mit einer Kappe 252 verschlossen. In Figur 11 ist dargestellt, wie der Flansch genutzt werden kann um eine Druckminderer-Filter-Kombination 254 (z.B. "Drufi" mit Flanschanschluss angeboten von der Anmelderin) anzuflanschen. Insoweit ist das Armaturenteil 224 mit dem Armaturenteil 20 des ersten Ausführungsbeispiels identisch. Das Armaturenteil 224 weist jedoch zusätzlich einen Drucksensor 254 auf. Der Drucksensor ermittelt den Druck im Bereich vor der Turbine 256 und dem Rückflussverhinderer 258. Wenn das Kugelhahn 260 während einer Periode, wo kein Wasser gezapft wird, mit dem Steuergerät 210 abgesperrt wird, fließt im Regelfall kein Wasser. Ein Druckabfall am Drucksensor 254 bedeutet dann, dass eine Leckage vorliegt. Die den Druck repräsentierenden Signale des Drucksensors 254 werden über das Steuergerät 210 an den zentralen Server übermittelt. Dort werden die Signale ausgewertet. Wird über den Messzeitraum eine Differenz ermittelt, die oberhalb eines vorgegebenen und einstellbaren Schwellwertes liegt, wird eine Leckage angenommen. Dann erzeugt der Server eine Nachricht, die per Email oder SMS an den zuständigen Installateur, Verwalter oder Wohnungsinhaber übermittelt wird.

Der vor der Turbine 256 angeordnete Rückflussverhinderer 258 bildet einen hydraulischen Widerstand. Dadurch wird die Turbine erst mit einer Strömung angeströmt, die den Anlaufwiderstand der Turbine überwindet. Ministrömungen fließen seitlich am Rückflussverhinderer vorbei und strömen die Turbine seitlich an. Der hierfür vorgesehene Bypass hat nur einen geringen Durchmesser und die Ministrömung eine hohe Geschwindigkeit, welche ausreicht um den Anlaufwiderstand auch bei geringen Strömungen zu überwinden.

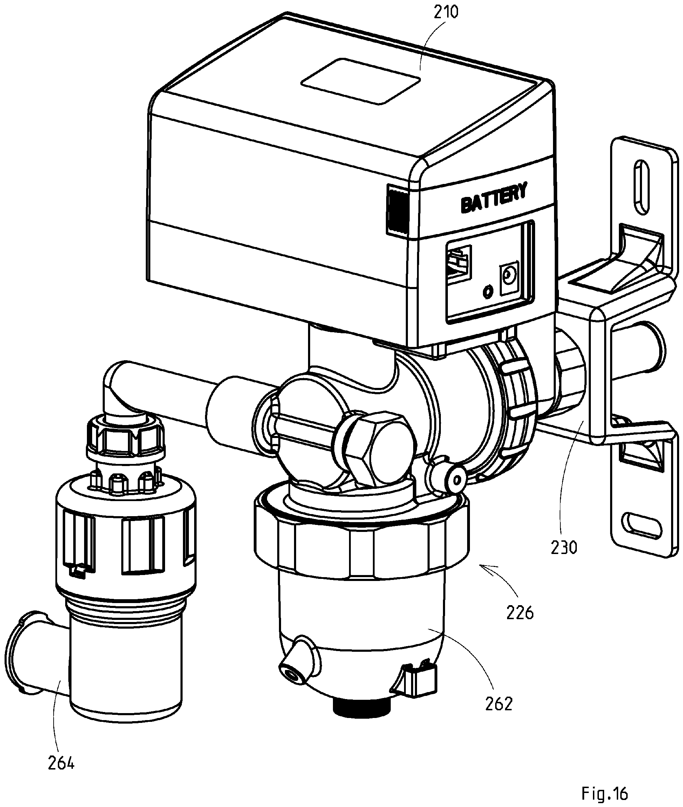

Figur 16 zeigt ein Armaturenteil 226 zur Durchführung einer Hygienespülung. Das Armaturenteil 226 arbeitet genauso wie das Armaturenteil 18 des ersten Ausführungsbeispiels. Das Armaturenteil 226 ist jedoch mit einer Wandhalterung 230 versehen. Ferner weist das Armaturenteil einen eigenen Strömungszähler in Form einer Turbine auf, die sich in einem nach unten ragenden Gehäuseteil 262 vor dem Ablauf 264 befinden. Mit dem zusätzlichen Strömungszähler kann auch Stagnation am letzten Ende einer Installation festgestellt werden. Liegen nämlich mehrere Zapfstellen zwischen dem Strömungsmesser an einem Armaturenteil 14, 16 oder 254 und werden die hinteren Zapfstellen unter Bildung von Stagnation nicht verwendet, so ist dies nur dann erfassbar, wenn die Armatur zur Durchführung einer Hygienespülung mit einem eigenen Strömungsmesser versehen ist. Liegt nur eine Zapfstelle in diesem Bereich, kann weiterhin das einfache Armaturenteil 18 eingesetzt werden.

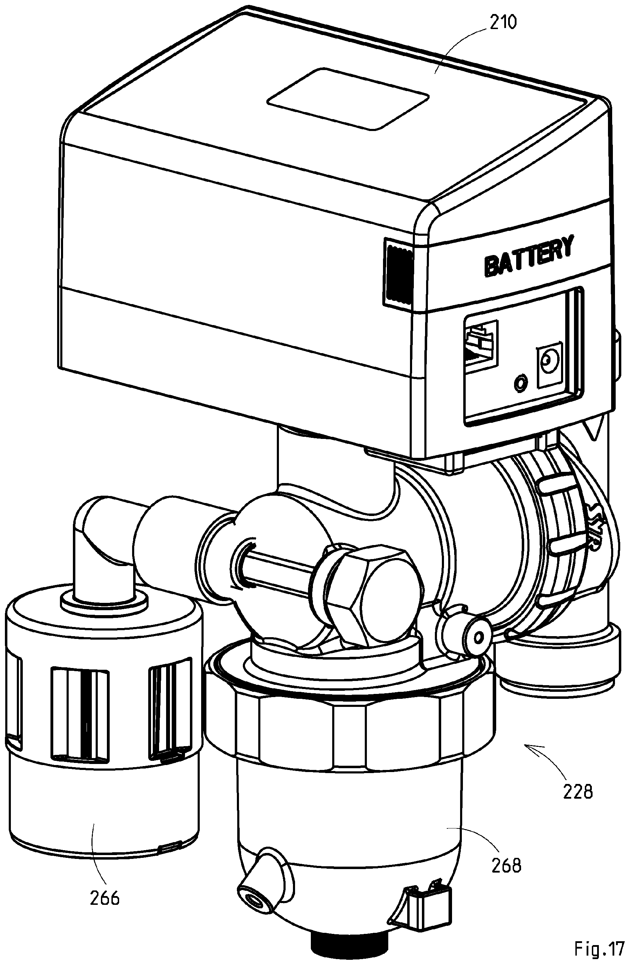

Figur 17 zeigt ein Armaturenteil 228 zur Durchführung einer Hygienespülung mit identischen Eigenschaften, wie das in Figur 16 dargestellte Armaturenteil 226. Es weist einen Ablauftrichter 266, ein Gehäuse 268 mit einem Strömungsmesser und ein Steuergerät 210 auf. Allerdings wird das Armaturenteil 228 oberhalb eines Auffangbeckens oder eines Ablaufs installiert und das Spülwasser ohne festen Anschluss an den Abfluss eines Waschbeckens nach unten abgegeben. Das Armaturenteil 228 wird ohne Wandhalterung direkt in einer Rohrleitung installiert.

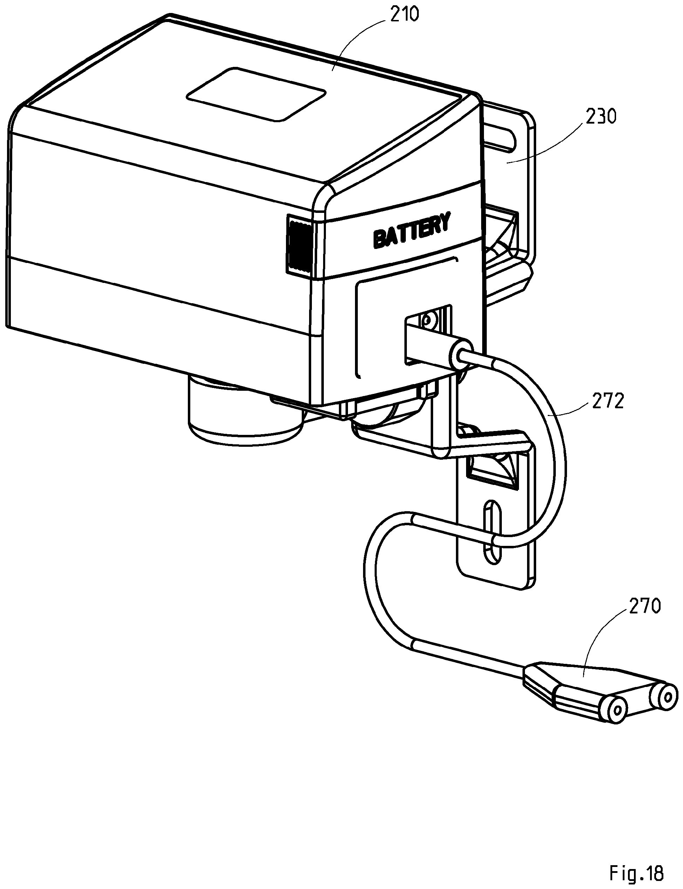

Figur 18 zeigt ein Steuergerät 210, das mit einer Wandhalterung 230 in einem Bereich gehalten wird, in dem das Risiko einer Wasserhavarie besteht. Figur 11 zeigt das Steuergerät 210 im Kellerbereich unterhalb eines Schwimmbads 212. Das Steuergerät kann aber auch im Bereich von Fenstern und Türen vorgesehen sein, durch die gelegentlich Regenwasser eindringt o.ä. Wie in Figur 18 gezeigt ist ein Feuchtigkeitssensor 270 über ein langes, flexibles Kabel direkt mit dem Steuergerät 210 verbunden. Der Feuchtigkeitssensor 270 kann in den gefährdeten Bereich gelegt werden. Tritt Feuchtigkeit auf, wird diese vom Feuchtigkeitssensor 270 detektiert und über das Steuergerät 210 an den Server geleitet. Der Server erzeugt eine unverzügliche Nachricht an den zuständigen Installateur, Verwalter oder Wohnungsinhaber, so dass die Ursache zügig festgestellt und möglichst behoben werden kann. Auf diese Weise werden auch solche Wasserschäden vermieden bzw. deren Auswirkungen begrenzt, die nicht durch die überwachte Wasserinstallation verursacht wurden.

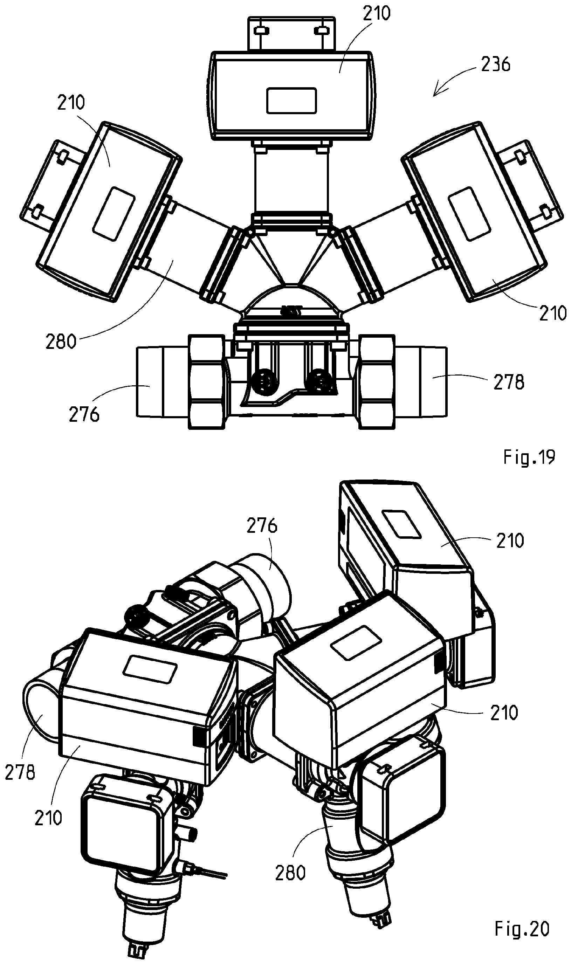

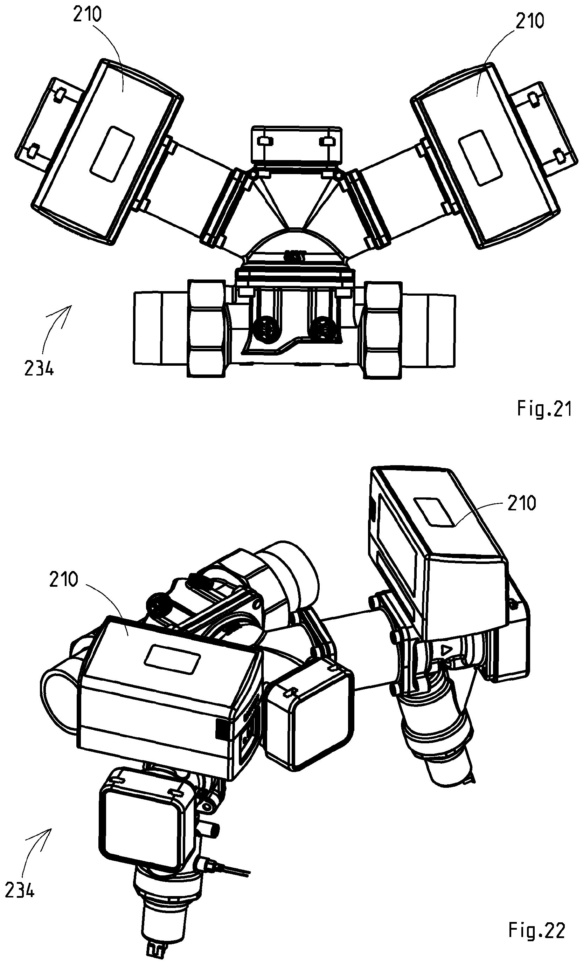

In dem Gebäude 220 ist ein Schwimmbad 212 vorgesehen. Das Befüllen oder Nachfüllen des Schwimmbads 212 erfolgt über eine Wasserleitung 274. Es ist wünschenswert, dass die Leitung 274 für kurze Füllzeiten eine möglichst hohe Durchflussrate ermöglicht. Die Armaturen 14, 16 und 254 haben einen begrenzten Durchmesser und sind für die für diese Anwendung erforderlichen Durchflussraten zu klein. Figur 19 bis 22 zeigen daher eine Ausführungsvariante eines Armaturenteils, bei der die Strömung in drei (Figur 19 und Figur 20) oder zwei (Figur 21 und Figur 22) Teilströme aufgeteilt wird. Das Armaturenteil 236 hat einen gemeinsamen Einlass 276 und Auslass 278. Jeder der möglichst gleichen Teilströme wird durch einen eigenen Strömungsmesser 280 geleitet, dessen Signale zu einem eigenen Steuergerät 210 übertragen werden. Danach werden die Teilströme wieder zusammengeführt und fließen durch den Auslass 278 gemeinsam weiter. Die in den drei Steuergeräten 210 erfassten Werte werden zu einem gemeinsamen Wert zusammengefasst und aufaddiert. Auf diese Weise kann ein Füllvorgang mit ausreichenden Durchflussraten durchgeführt werden. Die Steuergeräte 210 werden so eingestellt, dass die Leckageschutzfunktion während des Befüllens vollständig deaktiviert ist. Nach Beenden des Befüllens wird die Leckageschutzfunktion wieder eingeschaltet. Das Aktivieren und Deaktivieren kann mittels einer Anwendersoftware auf einem Smartphone bequem über den Server oder auch direkt per Fernbedienung erfolgen. Die aktivierte Leckageschutzfunktion kann auf besonders geringe Toleranzen eingestellt werden, wenn die überwachte Rohrleitung ausschließlich für das Befüllen des Schwimmbades 212 vorgesehen ist. Dadurch können größere Wasserschäden verhindert werden. Jeder geringe Druckabfall oberhalb des Schwellwertes wird zu einer Absperrung der Rohrleitung führen.

Je nach Anwendung kann auch eine Armatur 234 ausreichen, bei der lediglich zwei Teilströme vorgesehen sind. Dies ist in den Figuren 21 und 22 dargestellt.

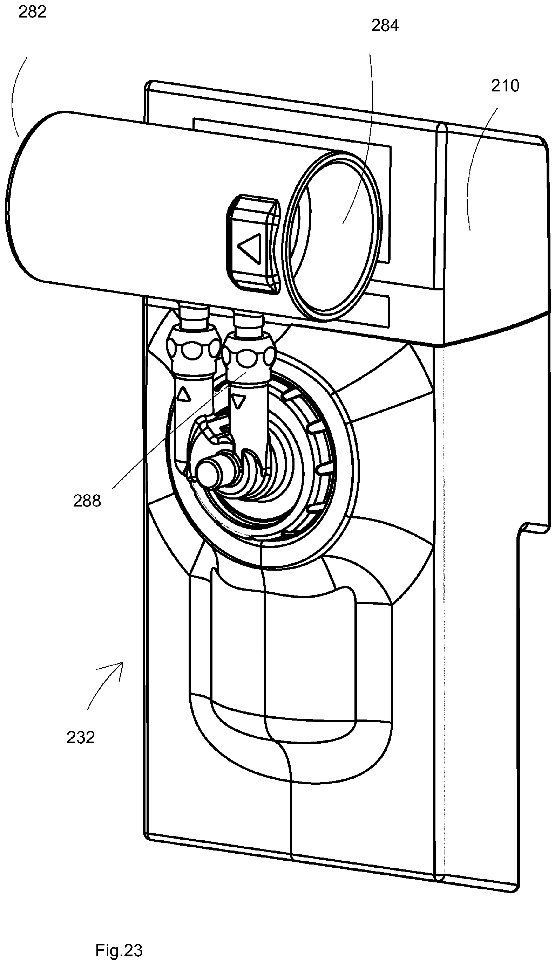

Figuren 23 bis 26 zeigen ein Armaturenteil zur Leckageüberwachung bei besonders großen Leitungen, in denen auch die Aufteilung in Teilströme nicht ausreichen würde. Ein Beispiel für eine solche Anwendung ist die Hauptleitung 214 zum Gebäude 220 dieses Ausführungsbeispiels. Die im Gebäude 220 vorhandenen Leitungen und Zapfstellen werden von den diversen Slave-Armaturen 14 bzw. 16 in den Wohnungen und dem Master 254 überwacht. Derartige Armaturen sind für die Hauptleitung zwischen der Versorgung und dem Armaturenteil 254 nicht geeignet. Der Wasserverbrauch wird mit dem Wasserzähler 216 erfasst. Die hierfür vorgesehene Turbine ist jedoch groß, träge und hat einen hohen Anlaufwiderstand. Kleinere Leckagen würden durch die Turbine fließen ohne erfasst zu werden. Hierfür ist ein Armaturenteil 232 vorgesehen.

Das Armaturenteil 232 umfasst einen Einlass 284 und einen Auslass 282. Zwischen Einlass 284 und Auslass 282 ist ein Rückflussverhinderer 286 angeordnet. Einlass 284 und Auslass 282 werden vor dem zu überwachenden Teil der Rohrleitung 214 in diese eingebaut. Der hydraulische Widerstand des Rückflussverhinderers 286 ist so ausgelegt, dass er nur etwas größer ist als der Anlaufwiderstand der Turbine des Wasserzählers 216. Er öffnet somit genau dann, wenn die Strömung groß genug ist um durch den Wasserzähler 216 erfasst zu werden.

Eine kleine Strömung, die beispielsweise durch Mikroleckage in der Hauptrohrleitung 214 verursacht wird, kann den Widerstand des Rückflussverhinderers 286 nicht überwinden und wird durch einen Bypass-Kanal 288 in die Armatur 232 geleitet. Dies ist durch Pfeile 290 illustriert.

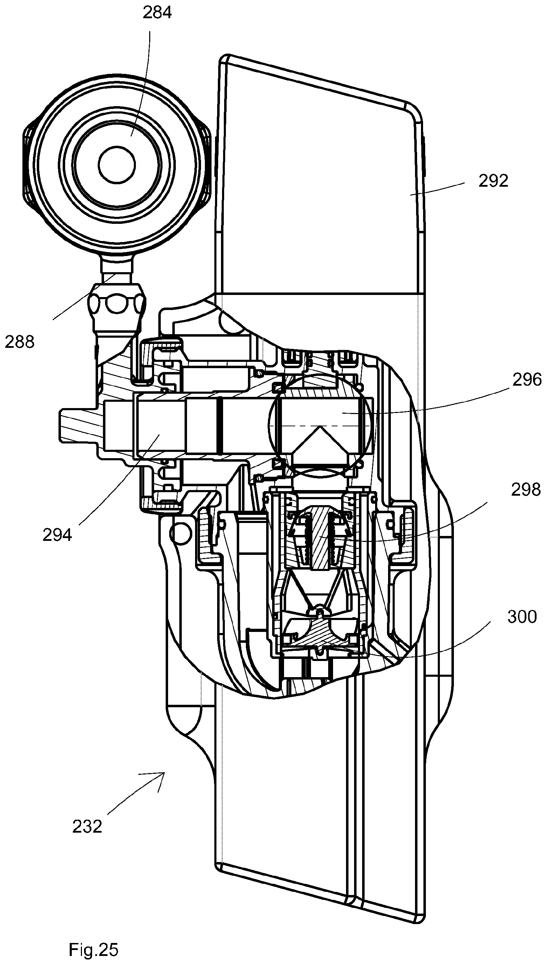

Der Querschnitt in Figur 25 zeigt das Innere der Armatur 232, die mit einem Gehäuse 292 versehen ist. Die Strömung wird durch einen horizontalen Kanal 294 und durch ein Kugelhahn 296 geleitet. Der Kugelhahn 296 wird, wie bei den übrigen Armaturen auch, von einem Steuergerät 210 betätigt. In einem vertikal verlaufenden Hohlraum unterhalb des Kugelhahns 296 ist ein Rückflussverhinderer 298 und eine Turbine 300 angeordnet, die zusammen mit einem Reed-Kontakt einen empfindlichen Strömungsmesser bilden, wie er auch in den anderen hier beschriebenen Armaturenteilen eingesetzt wird. Das Wasser fließt außen wieder nach oben und durch einen Kanal 302 an dem Rückflussverhinderer 286 vorbei zum Auslass 282. Dies ist durch Pfeile 304 illustriert.

Mit dem Strömungsmesser aus Turbine 300 und Rückflussverhinderer 298 wird es ermöglicht, dass auch sehr kleine Strömungen erfasst werden. Die Auswertung der Signale der Master-Armatur 254 am Hauseingang und der Signale der Armatur 232 liefert genaue Informationen darüber, ob sich in der Leitung 214 ein Leck befindet oder nicht. Zur Vermeidung eines Fehlalarms wird eine Mikroleckage erst mitgeteilt, wenn mehrere Messungen nacheinander zu unterschiedlichen Zeitpunkten eine Mikroleckage bestätigen. In der Zwischenzeit werden die Werte gespeichert.

Das zweite Ausführungsbeispiel teilt verschiedene Einheiten weiter auf und verwendet mehrere, in Reihe geschaltete Slave-Armaturen 14. Zwischen und hinter den Armaturen sind mehrere Zapfstellen 306 und 308 angeordnet. Die Verwendung einer solchen Reihenschaltungen ermöglicht es zum einen, niedrigere Schwellwerte für den maximalen Durchfluss einzustellen. Zum anderen ermöglicht die Reihenschaltung die genauere Lokalisierung der Leckageursache.

### 3.Ausführungsbeispiel

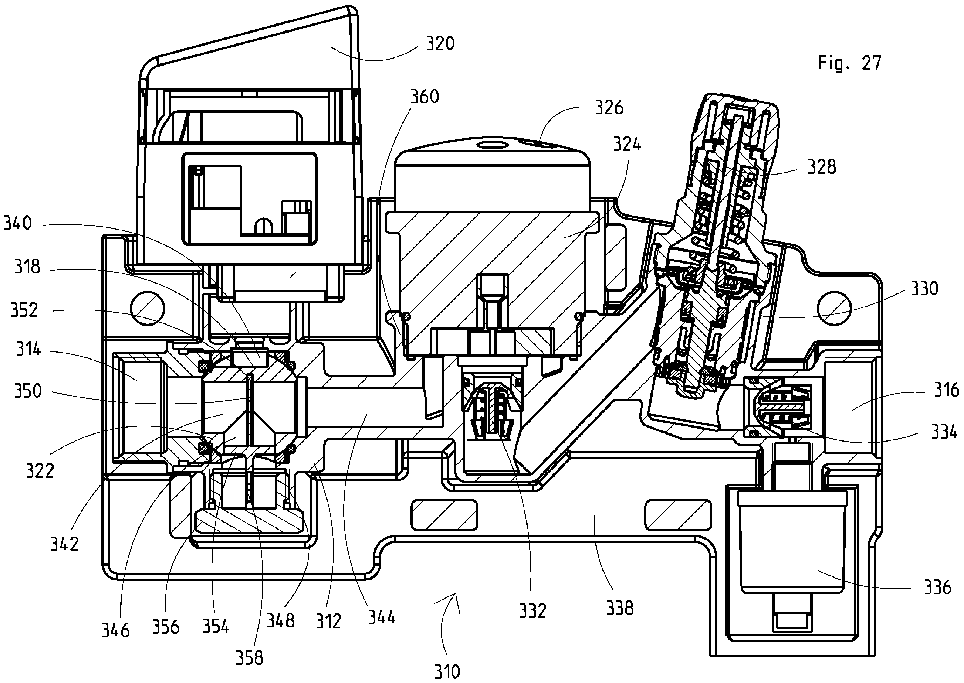

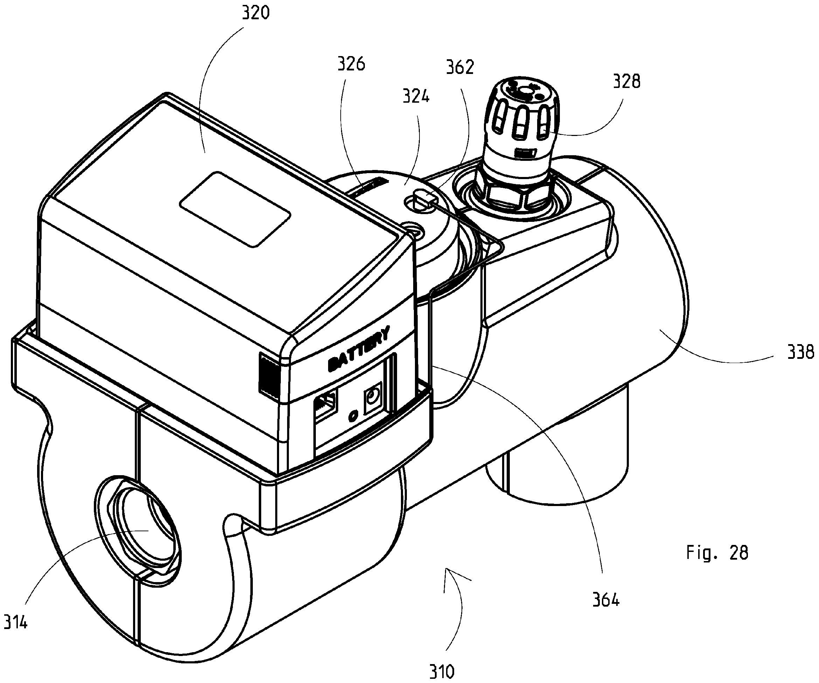

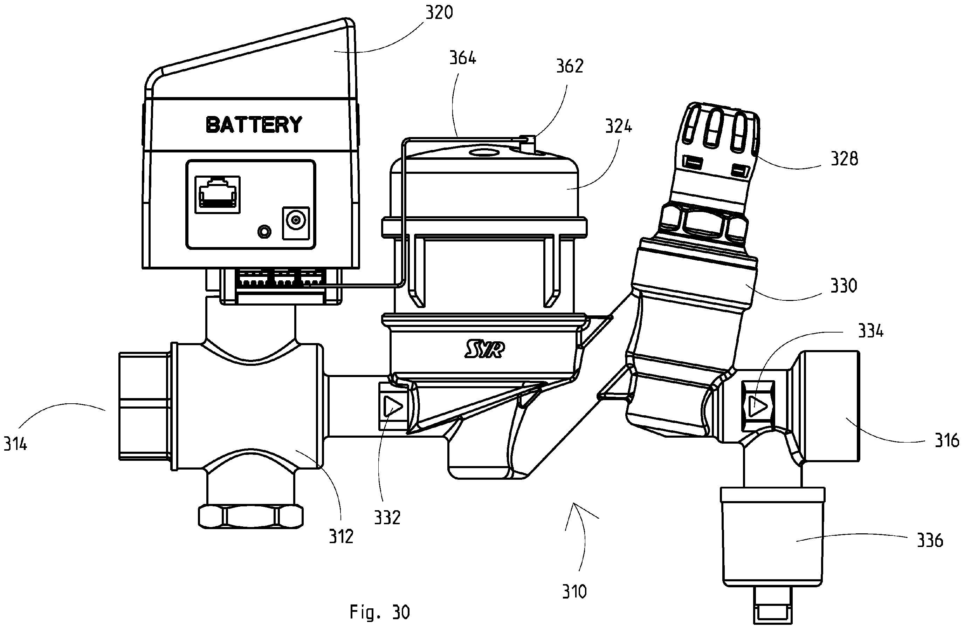

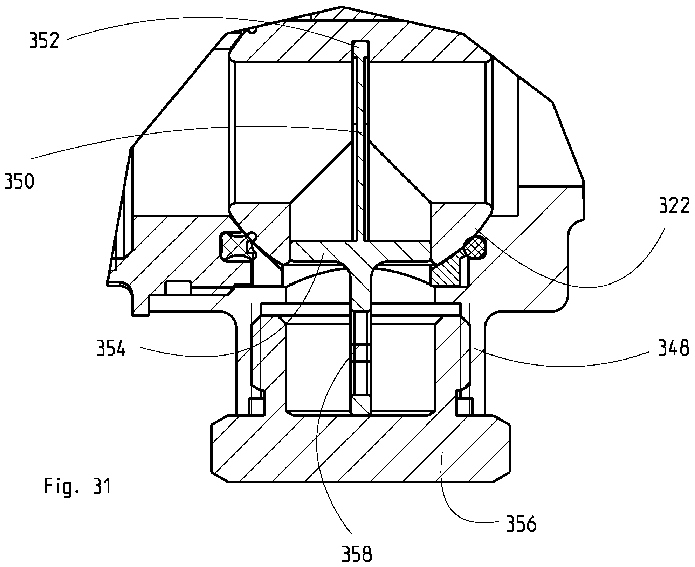

Die Figuren 27 bis 32 zeigen eine allgemein mit 310 bezeichnete Leckageschutzanordnung. Die Leckageschutzanordnung 310 ist eine Armatur mit einem Armaturengehäuse 312 mit einem Einlass 314 und einem koaxialen Auslass 316. Ferner weist die Leckageschutzanordnung 310 eine Absperrung in Form eines Kugelhahns 318 mit einer Kugel 322 und einem Steuergerät 320 auf. Stromabwärts der Absperrung 318 ist ein handelsüblicher, geeichter Wasserzähler 324 mit einer Verbrauchsanzeige 326 angeordnet. Vor dem Auslass 316 ist ein Druckminderer 328 in einem Stutzen 330 angeordnet. Stromaufwärts und stromabwärts des Druckminderers 328 ist jeweils ein in Auslassrichtung öffnender Rückflussverhinderer 332 bzw. 334 vorgesehen. Ein Drucksensor 336 erfasst den Ausgangsdruck im Auslass 316. Die gesamte Anordnung ist in einem weiteren Gehäuse 338 aus zwei Kunststoffhälften angeordnet. Das ist in Figur 28 gut zu erkennen.

Eine Anordnung 310 wird im vorliegenden Ausführungsbeispiel in jeder Wohnung eines mehrgeschossigen Gebäudes in der Rohrleitung installiert. Es ersetzt die dort üblicherweise befindliche Absperrung mit Wasserzähler. Die - nicht dargestellte - Rohrleitung verläuft entlang einer Achse zwischen koaxialem Einlass 314 und Auslass 316. Es versteht sich, dass die Anordnung 310 auch als Stand-Alone-Lösung in einem Einfamilien-Wohnhaus oder dergleichen eingesetzt werden kann.

Die Kugel 322 weist eine Durchgangsbohrung 342 auf. Die Kugel 322 des Kugelhahns 318 ist in Figur 27 in Durchgangsstellung gezeigt, bei welcher die Durchgangsbohrung 342 mit der Gehäusebohrung 344 des Gehäuses 312 fluchtet. Die Absperrung ist geöffnet. Die Kugel 322 ist mit einem Bolzen 340 verbunden. Der Bolzen 340 zum Betätigen der Kugel des Kugelhahns ist am oberen Ende mit einem Profil versehen. Das Steuergerät 320 mit Motor greift an diesem Profil an. Auf diese Weise wird die Verbindung zwischen Steuergerät 320 und Armatur unverdrehbar und mit definierter Kugelstellung hergestellt. Die Verbindung wird mit einer in Durchbrüche eingreifenden Klammer gesichert. Die Kugel 322 kann um eine vertikale Achse, die mit der Längsachse des Bolzens 340 fluchtet, gedreht werden. Auf diese Weise wird der Kugelhahn 318 durch ein Steuersignal geöffnet und geschlossen.

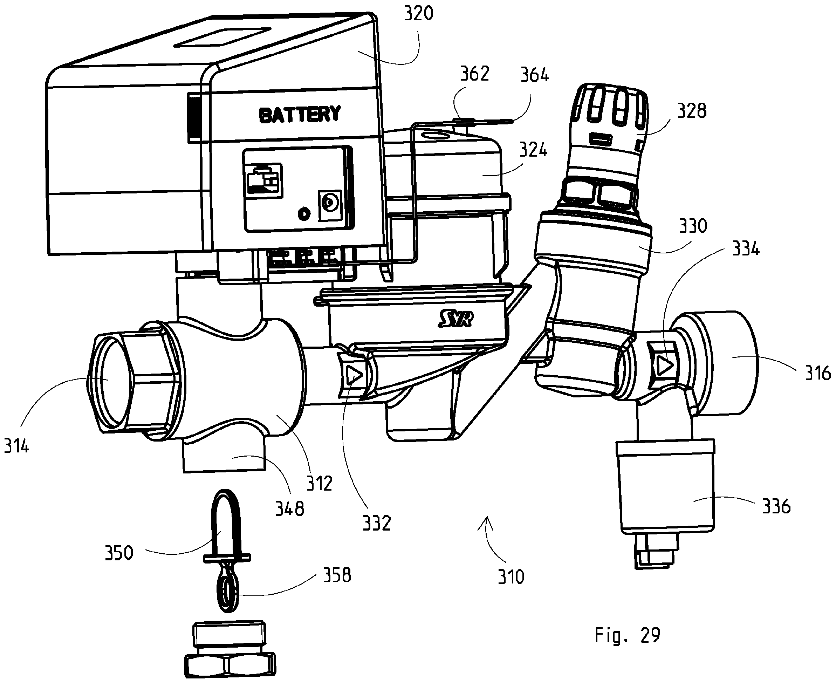

Zusätzlich zur horizontalen Durchgangsbohrung 342 weist die Kugel 322 eine sich nach unten erstreckende Bohrung 346 auf. Die Bohrung 346 fluchtet mit einem sich ebenfalls nach unten erstreckenden Gehäusestutzen 348. Der Gehäusestutzen 348 ist auch in Figur 29 zu erkennen. Durch den Gehäusestutzen 348 und die Bohrung 346 ist ein Sieb 350 in die Kugel 322 einsteckbar. Das Sieb 350 ist in Figur 29 gut erkennbar. Eine Rille 352 in Umfangsrichtung der Durchgangsbohrung 342 innerhalb der Kugel 322 dient zur Aufnahme des Siebrandes des Siebs 350. Das gesamte durch die Kugel 322 fließende Wasser wird am Sieb von groben Schmutzpartikeln befreit. Ein horizontaler Rand 354 verschließt die Bohrung 346. Zusätzlich verschließt ein Stopfen 356 den Stutzen 348, so dass kein Wasser nach unten ablaufen kann.

Zum Reinigen des Siebs wird der Kugelhahn 318 zunächst geschlossen. Dann kann kein Wasser ausfließen. Der Stopfen kann dann entfernt werden und das Sieb 350 an einem Griff 358 aus der Kugel 322 herausgezogen werden. Nach dem Reinigen kann das Sieb 350 in gleicher Weise wieder eingesetzt werden.

Stromabwärts der Absperrung 318 ist ein sich nach oben erstreckender Gehäusestutzen 360 vorgesehen. In den Gehäusestutzen 360 ist ein handelsüblicher, geeichter Wasserzähler 324 mit Verbrauchsanzeige 326 eingesetzt. Der Wasserzähler 324 ist leicht zu entfernen und kann in den gesetzlich geforderten Abständen regelmäßig problemlos ausgetauscht werden. In dem Wasserzähler 324 ist eine Turbine (nicht dargestellt), die von der Wasserströmung durch die Anordnung 310 angetrieben wird. Die Turbine treibt ein mechanisches Getriebe und die Anzeige 326 an. Eines der Getrieberäder ist mit einem Magnet versehen. Die Magnetbewegung wird mittels eines Reed-Kontakts 362 erfasst und über eine Signalleitung 364 an das Steuergerät 320 weitergeleitet.

Das Steuergerät 320 ist mit einer Signalauswerteeinheit versehen. In dieser Signalauswerteeinheit wird ermittelt, ob eine Leckage vorliegt. Das ist beispielsweise der Fall, wenn kontinuierlich eine sehr kleine Menge Wasser fließt (Minileckage) oder wenn in sehr kurzer Zeit sehr viel Wasser fließt (Rohrbruch). Wenn Leckage vorliegt, wird die Absperrung 318 geschlossen.

Das Steuergerät 320 ist mit einem Sender-Empfänger ausgestattet, welcher über ein Mobilfunknetz eine Verbindung zum Internet herstellt. Über das Internet kann eine Verbindung mit einem zentralen Server hergestellt werden. Mehrere Leckageschutzanordnungen können in einem Mehrfamilienhaus eingesetzt werden. Es versteht sich, dass dies nur exemplarisch ist und größere oder kleinere Einheiten ebenso denkbar sind.

Um eine möglichst effektive Anordnung mehrerer Leckageschutzarmaturen zu erreichen, ist eine sorgfältige Planung erforderlich. Dabei werden die Durchflussraten in einzelnen Abschnitten geschätzt oder gemessen und die Anzahl, Art und Verteilung der Armaturen derart geplant, dass an keiner Stelle besonders hohe Durchflussraten erlaubt werden müssen, ohne dass gleichzeitig die Herkunft des Durchflusses an den dahinterliegenden Armaturen lokalisiert werden kann. Dabei werden auch wirtschaftliche Aspekte berücksichtigt und es wird ein Optimum zwischen der Anzahl der erforderlichen Komponenten und der Größe des potentiell durch Leckage verursachten Schadens gefunden. Ein Ziel kann es beispielsweise sein, den maximalen Schaden auf 100 Liter zu begrenzen. Ein solcher Schaden kann vergleichsweise einfach beseitigt werden und dringt nicht durch Gebäudeteile o.ä.

Zum Installieren einer Anordnung wird zunächst das Armaturenteil an die Rohrleitung angeschlossen. Ansonsten erhält das Steuergerät keine Werte. Anschließend wird das Steuergerät 320 an eine Stromversorgung angeschlossen. Für den Fall, dass der Strom ausfällt, ist weiterhin eine Notromversorgung mit Akkumulatoren oder Batterien vorgesehen. Diese werden regelmäßig während der Wartung ausgetauscht. Die Internetverbindung des Steuergerätes 310 wird direkt mittels einer eigenen SIM-Karte über ein Mobilfunknetz hergestellt.

Die temporäre IP-Adresse des Steuergerätes 310 wird selbstständig an einen zentralen Server übermittelt. Weiterhin meldet der Wohnungsbesitzer oder sein Installateur das Gerät über ein Internet-Portal an. Hierzu ist ein Code oder ein Identifikationszeichen sichtbar auf dem Gerät angebracht. Das Zeichen kann mittels Kamera an einem mobilen Endgerät eingelesen und direkt an das Internet-Portal übertragen werden.

Der Server verwaltet alle relevanten Daten. Die Verwaltungssoftware liegt auf dem Server und kann vom Hersteller auf einfache Weise gewartet und verbessert werden. Das Steuergerät 320 erfordert keine weiteren Installationsschritte oder Wartungsaufwand. Dadurch wird es möglich, die Installation durch den in IT-Angelegenheiten häufig unerfahrenen Installateur durchzuführen ohne einen IT-Fachmann hinzuziehen zu müssen. Der Hardware-Aufwand ist gering.

Der Installateur oder der Wohnungsbesitzer kann über ein eigenes Internetportal die für die Anwendung geeigneten Parameter selbstständig eingeben. Zu den Parametern gehören das Ein- und Ausschalten des Urlaubsmodus, Einstellen der Schwellwerte für Volumenstrom, Volumenstrom pro Zeit, maximale Dauer eines Volumenstroms und Druckabfall. Diese Daten sind auf dem Server auch dann gesichert, wenn ein Steuergerät 320 nicht mehr funktionstüchtig ist. Dadurch ist der Wechsel auf ein anderes, identisches Gerät besonders leicht möglich. Der Hersteller kann die verschiedenen Betriebsparameter und sonstige Daten statistisch auswerten. Dadurch kann der Herstellungsprozess optimiert werden. Falls die Parameter direkt am Steuergerät 320 eingegeben werden, werden auch diese neuen Daten an den Server übertragen.

Der Zugang zu dem Internet-Portal kann auf herkömmliche Weise an einem PC oder über eine geeignete Anwendungssoftware (App) auf einem Smartphone erfolgen. Letzteres kann auch als Adresse für Mitteilungen über Störungen verwendet werden. Diese oder eine andere Adresse für Mitteilungen über Störungen kann für das jeweilige Projekt über das Internet-Portal eingestellt werden. Vorteilhafterweise werden alle Projekte eines Anwenders in einer Übersicht dargestellt, so dass der Anwender sich nur einmal einloggen muss und anschließend jedes Projekt einzeln verwalten kann.

Da für jede Wohnung oder jeden Wohnungskomplex eine eigene Leckageüberwachung erfolgt, kann dort auch eine individuelle Urlaubsschaltung eingerichtet werden. Die Toleranzen können geringer gewählt werden, so dass der Schaden bei Leckage geringer gehalten werden kann. Wenn eine besonders große Menge gezapft wird, prüft das Steuergerät 320 am Hauseingang zunächst, ob der Volumenstrom aus einer Wohnung oder aus verschiedenen Wohnungen kommt. Im letzteren Fall liegt möglicherweise keine Leckage vor und eine Absperrung wird vermieden. Leckage kann durch die Verwendung einer Vielzahl von Leckageschutzarmaturen besser lokalisiert und daher schneller gefunden werden. Die übrigen Gebäudeteile bleiben unbeeinflusst, da auch die Absperrung lokal erfolgt.

Zusätzlich zur Absperrung und zum Wasserzähler ist ein Druckminderer 328 in der Anordnung 310 vorgesehen. Mit dem Druckminderer 328 kann der Ausgangsdruck der Anordnung eingestellt werden. Versorgerseitige Druckschwankungen können auf diese Weise abgefangen werden. Der Druckminderer 328 bildet eine Einheit, die als Ganzes in den Stutzen 330 eingesteckt wird. Er ist leicht zugänglich und kann gut ausgetauscht oder gewartet werden.

Sowohl hinter dem Wasserzähler 324, als auch hinter dem Druckminderer 328 ist ein Rückflussverhinderer vorgesehen. Beide Rückflussverhinderer 332 und 334 sind als Rückflussverhindererpatrone ausgebildet und in die Gehäusebohrung innerhalb des Gehäuses eingesteckt. Die Rückflussverhinderer 332 und 334 öffnen in Auslassrichtung. Es kann kein Wasser aus der dahinter liegenden Installation zurück in die Versorgungsleitung fließen. Wenn ein Bauteil, etwa der Wasserzähler oder der Druckminderer ausgetauscht werden soll, wird die Absperrung geschlossen. Dadurch wird vermieden, dass Wasser aus der Versorgungsleitung in die Armatur fließt. Die Rückflussverhinderer vermeiden, dass Wasser aus der dahinter liegenden Installation in die Armatur fließt. Die Bauteile können leicht entfernt werden.

Am Auslass 316 ist ein Drucksensor 336 angeordnet. Mit dem Drucksensor kann ein Druckabfall bei abgesperrter Anordnung erfasst werden. Mit dem Wasserzähler und dem Drucksensor 336 können auf diese Weise Volumenstrom, Volumenstrom/Zeit, Dauer eines Volumenstroms und Druckabfall ermittelt werden. Das Steuergerät bzw. ein zentraler Server prüft, ob vorgegebene Schwellwerte erreicht werden und möglicherweise Leckage anzunehmen ist. Dann wird der Kugelhahn betätigt und die Wasserzufuhr abgesperrt.

Das vorstehend beschriebene Ausführungsbeispiel wurde konkret beschrieben. Es versteht sich, dass die Übertragungswege - drahtlos oder verdrahtet - beliebig gewählt werden können. Auch ist es für die Durchführung der Erfindung nicht zwingend erforderlich, einen zentralen Server einzurichten. Vielmehr kann diese Funktion auch beispielsweise von einem der Steuergeräte übernommen werden.

Je nach hydraulischer Situation werden die Armaturen sowohl in Warm- als auch in Kaltleitungen eingebaut. Dies ist insbesondere bei einer zentralen Warmwasserversorgung sinnvoll. Zusätzlich zu den Drucksensoren können auch bei diesem Ausführungsbeispiel Temperatursensoren in den Armaturen vorgesehen sein. Die Temperatursensoren ermöglichen die Überwachung des unteren Temperaturlimits von beispielsweise 55 Grad für Warmwasser und oberen Temperaturlimits von beispielsweise 25 Grad Celsius um die Bildung von Legionellen oder ähnlichen Keimen und Mikroorganismen zu verhindern.

### 4.Ausführungsbeispiel

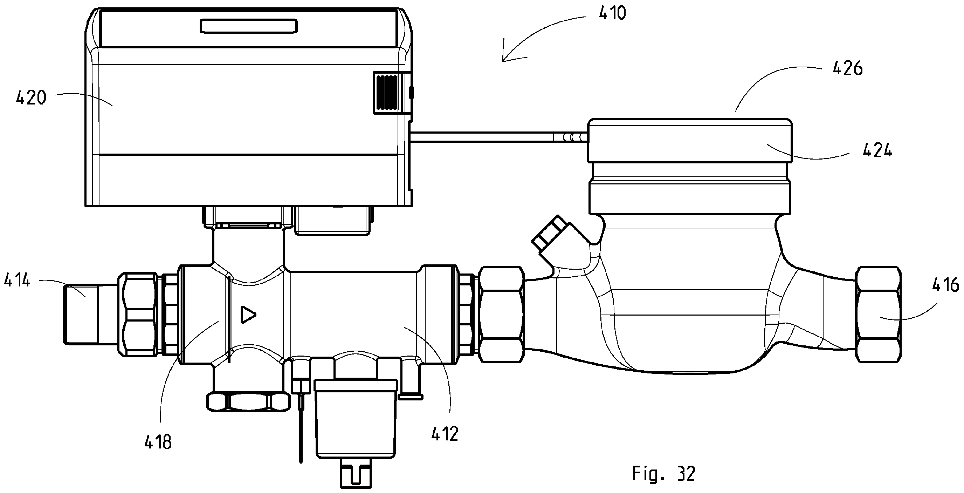

Fig. 32 zeigt eine Leckageschutzanordnung 410 mit Strömungsmesser und zusätzlichem Wasserzähler entsprechend einem vierten Ausführungsbeispiel. Die Leckageschutzanordnung 410 umfasst wie die obigen Ausführungsbeispiele eine Armatur mit einem Armaturengehäuse 412 mit einem Einlass 414 und einem koaxialen Auslass 416. Ferner weist die Leckageschutzanordnung 410 eine Absperrung in Form eines Kugelhahns 418 mit einer Kugel und einem Steuergerät 420 auf. Stromabwärts der Absperrung 418 ist ein Strömungsmesser in Turbinenform in dem Gehäuse 412 angeordnet. Ein handelsüblicher, geeichter Wasserzähler 424 mit einer Verbrauchsanzeige 426 ist stromabwärts des Gehäuses 412 angeordnet. Sowohl der Strömungsmesser, als auch der Wasserzähler 242 liefern ein die Strömung repräsentierendes Signal an das Steuergerät 420. Das Steuergerät kann auf diese Weise Leckage überwachen. Zusätzlich kann der Verbrauch der mit dem geeichten Wasserzähler 424 erfasst wurde, an einen zentralen Server übermittelt werden. Es ist also nicht mehr erforderlich den Wasserzähler durch eine Person ablesen zu lassen.

Im übrigen arbeiten das Steuergerät 420, der Kugelhahn 418, der Strömungsmesser und die übrigen Komponenten wie oben anhand der Ausführungsbeispiele 1-3 beschrieben.

## Patentansprüche

1. Leckageschutzanordnung mit wenigstens zwei Armaturenteilen (14, 16, 18, 20; 230; 234, 236; 312; 412) zum Einbau in einer Wasserinstallation vor einer oder mehreren Zapfstellen (306, 308); enthaltend
(a) jeweils eine Turbine oder anderen Strömungsmesser (72; 110;160; 256; 280; 300) für jedes der Armaturenteile, der Signale erzeugt, welche die Strömung durch das zugehörige Armaturenteil repräsentieren,
(b) jeweils eine in jedem der Armaturenteile angeordnete Absperrung (50; 107; 128; 148; 260; 296; 318; 418) zum Unterbrechen der Wasserzufuhr in der Wasserinstallation; und
(c) jeweils ein eigenes Steuergerät (10; 210; 320; 420) für jedes Armaturenteil mit einer von den Signalen der Turbine oder des anderen Strömungsmessers (72; 110;160; 256; 280; 300) beaufschlagten Signalverarbeitungseinrichtung zum Ermitteln untypischer und/oder unerwünschter Strömungsverhältnisse in der Wasserinstallation und zum Betätigen der Absperrung (50; 107; 128; 148; 260; 296; 318; 418); wobei
(d) jedes der Steuergeräte (10; 210; 320; 420) eine eigene Kommunikationseinheit aufweist, über welche die Leckageschutzanordnung mittels eines Benutzer-Endgeräts mit einer Kommunikationseinheit ferngesteuert einstellbar ist
**dadurch gekennzeichnet, dass**
(e) eine Kommunikation der Steuergeräte (10; 210; 320; 420) untereinander herstellbar ist.

2. Leckageschutzanordnung nach Anspruch 1, **dadurch gekennzeichnet, dass** ein zentraler Netzwerk-Server mit einem Computerprogramm vorgesehen ist, über welchen die Kommunikationseinheit des Benutzer-Endgeräts und die Kommunikationseinheiten der Steuergeräte (10; 210; 320; 420) kommunizieren.

3. Leckageschutzanordnung nach Anspruch 2, **dadurch gekennzeichnet, dass** die Steuergeräte (10; 210; 320; 420) baugleich sind und mit dem gemeinsamen, zentralen Server verbunden sind, auf welchem die für die Auswertung der von dem Armaturenteil erhaltenen Signale und die Steuerung der Armaturenteile erforderliche Software vorgesehen ist.

4. Leckageschutzanordnung nach einem der vorgehenden Ansprüche, **dadurch gekennzeichnet, dass** die Steuergeräte mit Parametern und/oder Steuerbefehlen des Benutzer-Endgeräts beaufschlagt sind.

5. Leckageschutzanordnung nach einem der vorgehenden Ansprüche 2 bis 4, **dadurch gekennzeichnet, dass** die Kommunikationseinheiten der Steuergeräte, die Kommunikationseinheiten der Benutzer-Endgeräte und der zentrale Server über das Internet oder ein anderes geeignetes Netzwerk miteinander kommunizieren.

6. Leckageschutzanordnung nach einem der vorgehenden Ansprüche, **dadurch gekennzeichnet, dass** die Kommunikationseinheiten einen Sender-Empfänger für die Kommunikation über ein LAN, WLAN, Mobilfunknetz oder ein anderes drahtloses Netzwerk aufweisen, der in einem gesonderten Gerät angeordnet ist, und der Sender-Empfänger lösbar an der Kommunikationseinheit anschließbar ist.

7. Leckageschutzanordnung nach Anspruch 6, **dadurch gekennzeichnet, dass** die Kommunikation zumindest teilweise über ein Stromnetz erfolgt.

8. Leckageschutzanordnung nach einem der vorgehenden Ansprüche, **dadurch gekennzeichnet, dass** zumindest eines der Armaturenteile einen zusätzlichen Drucksensor (80; 114;254; 336) und/oder Temperatursensor aufweist.

9. Leckageschutzanordnung nach einem der vorgehenden Ansprüche, **dadurch gekennzeichnet, dass** zusätzlich ein Steuergerät (210) vorgesehen ist, welches mit Signalen eines Sensors (270) beaufschlagt ist, mit dem Regenwasser oder Wasser aus anderen Quellen als der Wasserinstallation detektierbar ist.

10. Leckageschutzanordnung nach einem der vorgehenden Ansprüche, **dadurch gekennzeichnet, dass** ein Armaturenteil (234, 236) vorgesehen ist, bei dem die Strömung in mehrere, parallele Teilströme aufgeteilt wird, welche separat mit eigenen Strömungsmessern erfasst und ausgewertet und anschließend wieder zusammengeführt werden.

11. Leckageschutzanordnung nach einem der vorgehenden Ansprüche, **dadurch gekennzeichnet, dass** bei einem der Armaturenteile (232) ein Rückflussverhinderer, eine Klappe oder ein anderer bei großen Durchflussmengen vernachlässigbarer dynamischer Widerstand (286) in der Strömung vorgesehen ist und die Strömung stromaufwärts zu dem Widerstand durch einen Bypass (288) leitbar ist, in dem zusätzlich zu dem ersten Strömungsmesser (216) in der Hauptleitung ein zweiter Strömungsmesser (300) vorgesehen ist, der wesentlich empfindlicher ist als der erste Strömungsmesser (216) und Strömungen erfassen kann, welche zu klein sind um den Widerstand (286) zu überwinden.

12. Leckageschutzanordnung nach einem der vorgehenden Ansprüche, **dadurch gekennzeichnet, dass** ein zusätzliches Steuergerät (10; 210; 320; 420) vorgesehen ist, welches an einer Heizungsarmatur in einem Heizkreislauf installierbar ist, mit dem Leckage in dem Heizkreislauf erfassbar ist.

13. Leckageschutzanordnung nach einem der vorgehenden Ansprüche, **dadurch gekennzeichnet, dass** ein geeichter Wasserzähler (324; 424) mit Verbrauchsanzeige (326; 426) vorgesehen ist, und Mittel zum Übertragen eines die Wasserströmung repräsentierendes Signal von dem Wasserzähler an das Steuergerät (320; 420), wobei der Strömungszähler von dem Wasserzähler (324) gebildet ist.

14. Leckageschutzanordnung nach einem der vorgehenden Ansprüche, **dadurch gekennzeichnet, dass** die Absperrung von einem Kugelhahn (318) mit einer Kugel (322) gebildet ist, wobei die Kugel (322) eine Durchgangsbohrung (342) mit einem Sieb (350) aufweist, wobei das Armaturenteil ein Gehäuse (312) mit einem verschließbaren Gehäusestutzen senkrecht zur Durchflussrichtung des Kugelhahns (318) aufweist, durch welchen ein Zugang zur Kugel (322) des Kugelhahns herstellbar ist und dass das Sieb (350) durch den Gehäusestutzen und eine Bohrung (346) in der Kugel (322) entfernbar und einsetzbar ist.

## Claims

1. Leakage protection assembly with at least two fitting portions (14, 16, 18, 20; 230; 234, 236; 312; 412) for the installation in a water installation before one or more tap points (306, 308), comprising
(a) a turbine or another flow meter (72; 110; 160; 256; 280; 300) for each of the fitting portions generating signals representing the flow through the respective fitting portion,
(b) a shut-off valve (50; 107; 128; 148; 260; 296; 318; 418) installed in each of the fitting portions for interrupting the water supply in the drinking water installation; and
(c) an individual control device (10; 210; 320; 420) for each fitting portion with a signal processing device fed with signals from the turbine or the other flow meter (72; 110; 160; 256; 280; 300) for determining non-typical and/or unwanted flow conditions in the water installation and for operating the shut-off valve (50; 107; 128; 148; 260; 296; 318; 418); wherein
(d) each of the control devices (10; 210; 320; 420) is provided with its own communication unit by means of which the leakage protection assembly can be adjusted by remote control with a user end device having a communication unit;
**characterized in that**
(e) a communication of the control devices (10; 210; 320; 420) amongst each other can be established.

2. Leakage protection assembly according to claim 1, **characterized in that** a central network server with a computer program is provided for the communication of the communication unit of the user end device and the communication unit of the control device (10; 210; 320; 420).

3. Leakage protection assembly according to claim 2, **characterized in that** the control devices (10; 210; 320; 420) are of the same kind and are connected to a common central server where the processing of the signals received from the fitting portion is effected and the software required for the control of the fitting portion is provided.

4. Leakage protection assembly according to any of the preceding claims, **characterized in that** the control devices are fed with parameters and/or control commands from the user end device.

5. Leakage protection assembly according to any of the preceding claims 2 to 4, **characterized in that** the communication units of the control devices, the communication units of the user end devices and the central server communicate by internet or any other suitable network.

6. Leakage protection assembly according to any of the preceding claims, **characterized in that** the communication units are provided with an emitter-receiver for the communication via LAN, WLAN, mobile telecommunication networks or any other wireless network which is provided in a separate device which is adapted to be releasably connected to the communication unit.

7. Leakage protection assembly according to claim 6, **characterized in that** the communication is effected at least partially through a power grid.

8. Leakage protection assembly according to any of the preceding claims, **characterized in that** at least one of the fitting portions is provided with an additional pressure sensor (80; 114; 254; 336) and/or temperature sensor.

9. Leakage protection assembly according to any of the preceding claims, **characterized in that** additionally a control device (210) is provided which is fed with signals of a sensor (270) which is configured to detect rain water or water from other sources than the water installation.

10. Leakage protection assembly according to any of the preceding claims, **characterized in that** a fitting portion (234, 236) is provided where the flow is divided in several parallel flow portions which are measured and processed with individual flow meters and merged afterwards.

11. Leakage protection assembly according to any of the preceding claims, **characterized in that** with one of the fitting portions (232) a backflow preventer, a flap or another dynamic resistance (286) which is neglectable at large flow rates is provided in the flow and the flow is guided though a bypass (288) upstream of the resistance, where in the same pipe a second flow meter (300) is provided in addition to a first flow meter (216), the second flow meter being much more sensitive than the first flow meter and adapted to detect flow rates which are too small to overcome the resistance (286).

12. Leakage protection assembly according to any of the preceding claims, **characterized in that** an additional control device (10; 210; 320; 420) is provided which is adapted to be instaled at a heating fitting in a heating circuit in order to detect leakage in the heating circuit.

13. Leakage protection assembly according to any of the preceding claims, **characterized in that** a calibrated water meter (324; 424) with a consumption indicator (326; 426) is provided and means for transmitting a signal representing the water flow from the water meter to the control device (320; 420), wherein the flow meter is formed by the water meter.

14. Leakage protection assembly according to any of the preceding claims, **characterized in that** the shut-off valve is a ball valve (318) with a ball (322), wherein the ball (322) has a through-bore hole (342) with a sieve (350) and the fitting portion has a housing (312) with a closable housing socket perpendicular to the flow direction of the ball valve (318) adapted to establish an access to the ball (322) of the ball valve and that the sieve (350) can be removed and inserted through the housing socket and a bore hole (346) in the ball (322).

## Revendications

1. Disposition antifuite munie d'au moins deux pièces de robinetterie (14,16,18,20;230;234,236;312;412) destinée à être implantée dans une installation de distribution d'eau en amont d'une ou plusieurs prises d'eau (306,308) ; comprenant
(a) à chaque fois une turbine ou un autre dispositif de mesure du courant (72;110;160;256;280;300) pour chacune des pièces de robinetterie qui génère des signaux représentant le courant traversant la pièce de robinetterie associée,
(b) à chaque fois un dispositif d'arrêt (50;107;128;148;260;296;318;418) disposé dans chacune des pièces de robinetterie et destiné à interrompre l'alimentation en eau dans l'installation de distribution d'eau ; et
(c) à chaque fois un appareil de commande (10;210;320;420) propre à chaque pièce de robinetterie muni d'un dispositif de traitement de signaux auquel sont appliqués les signaux de la turbine ou de l'autre dispositif de mesure du courant (72;110;160;256;280;300) et qui est destiné à déterminer les conditions de courant atypiques et/ou intempestives dans l'installation hydraulique et à actionner le dispositif d'arrêt (50;107;128;148;260;296;318;418) ;
(d) chacun des appareils de commande (10;210;320;420) présentant sa propre unité de communication permettant de régler par commande à distance le dispositif antifuite au moyen d'un terminal d'utilisateur avec une unité de communication,
**caractérisée en ce que**
(e) il est possible d'établir une communication des appareils de commande (10;210;320;420) entre eux.

2. Disposition antifuite selon la revendication 1, **caractérisée en ce qu'**il est prévu un serveur de réseau central muni d'un programme informatique permettant à l'unité de communication du terminal d'utilisateur et aux unités de communication des appareils de commande (10;210;320;420) de communiquer.

3. Disposition antifuite selon la revendication 2, **caractérisée en ce que** les appareils de commande (10;210;320;420) sont de construction identique et sont connectés au serveur central commun dans lequel sont prévus le logiciel nécessaire à l'évaluation des signaux reçus par la pièce de robinetterie et le logiciel nécessaire à la commande des pièces de robinetterie.

4. Disposition antifuite selon l'une quelconque des revendications précédentes, **caractérisée en ce que** des paramètres et/ou des ordres de commande du terminal d'utilisateur sont appliqués aux appareils de commande.

5. Disposition antifuite selon l'une quelconque des revendications 2 à 4, **caractérisée en ce que** les unités de communication des appareils de commande, les unités de commande des terminaux d'utilisateur et le serveur central communiquent entre eux via internet ou un autre réseau adéquat.

6. Disposition antifuite selon l'une quelconque des revendications précédentes, **caractérisée en ce que** les unités de communication présentent un émetteur/récepteur pour la communication via LAN, WLAN, un réseau radio ou un autre réseau sans fil qui est disposé dans un appareil à part, et l'émetteur/récepteur peut se raccorder à l'unité de communication de manière amovible.

7. Disposition antifuite selon la revendication 6, **caractérisée en ce que** la communication s'effectue au moins partiellement via un réseau de courant électrique.

8. Disposition antifuite selon l'une quelconque des revendications précédentes, **caractérisée en ce qu'**au moins l'une des pièces de robinetterie présente un capteur de pression supplémentaire (80;114;254;336) et/ ou un capteur de température.

9. Disposition antifuite selon l'une quelconque des revendications précédentes, **caractérisée en ce qu'**il est prévu un appareil de commande (210) supplémentaire auquel sont appliqués les signaux d'un capteur (270) permettant de détecter l'eau de pluie ou l'eau provenant de sources autres que l'installation hydraulique.

10. Disposition antifuite selon l'une quelconque des revendications précédentes, **caractérisée en ce qu'**il est prévu une pièce de robinetterie (234,236) dans laquelle le courant est divisé en plusieurs courants partiels parallèles qui sont détectés et évalués séparément par leur propre dispositif de mesure du courant pour être finalement réunis.

11. Disposition antifuite selon l'une quelconque des revendications précédentes, **caractérisée en ce qu'**une vanne antiretour, un clapet ou une autre résistance dynamique (286) négligeable en cas de débits élevés sont prévus dans le courant pour l'une des pièces de robinetterie (232) et le courant peut être guidé en amont de la résistance par un bypass (288) dans lequel il est prévu dans la conduite principale en plus du premier dispositif de mesure du courant (216) un second dispositif de mesure du courant (300) qui est essentiellement plus sensible que le premier dispositif de mesure du courant (216) et peut détecter les courants qui sont trop faibles pour surmonter la résistance (286).

12. Disposition antifuite selon l'une quelconque des revendications précédentes, **caractérisée en ce qu'**il est prévu un appareil de commande supplémentaire (10;210;320;420) qui peut être installé sur une pièce de robinetterie pour chauffage située dans un circuit de chauffage et qui permet de détecter des fuites dans le circuit de chauffage.

13. Disposition antifuite selon l'une quelconque des revendications précédentes, **caractérisée en ce qu'**il est prévu un compteur d'eau calibré (324;424) muni d'un dispositif d'affichage de la consommation (326;426) et des moyens destinés à transmettre un signal représentant le courant d'eau du compteur d'eau à l'appareil de commande (320;420), le compteur d'eau (324) formant le compteur de courant.

14. Disposition antifuite selon l'une quelconque des revendications précédentes, **caractérisée en ce qu'**un robinet à bille (318) muni d'une bille (322) forme le dispositif d'arrêt, la bille (322) présentant un perçage de passage (342) muni d'un filtre (350), la pièce de robinetterie présentant un boîtier (312) muni d'un raccord de boîtier pouvant se fermer perpendiculairement au sens d'écoulement du robinet à bille (318) à travers lequel un accès à la bille (322) du robinet à bille peut être créé et que le filtre (350) peut s'enlever et s'insérer à travers le raccord de boîtier et un perçage (346) situé dans la bille (322).
